(19) Europäisches Patentamt / European Patent Office / Office européen des brevets

(11) **EP 4 112 561 A1**

(12) **EUROPEAN PATENT APPLICATION**
published in accordance with Art. 153(4) EPC

(43) Date of publication:
**04.01.2023 Bulletin 2023/01**

(21) Application number: **21761864.4**

(22) Date of filing: **26.02.2021**

(51) International Patent Classification (IPC):
**C01G 53/00** *(2006.01)* **H01M 4/505** *(2010.01)*
**H01M 4/525** *(2010.01)*

(52) Cooperative Patent Classification (CPC):
**C01G 53/00; H01M 4/505; H01M 4/525;**
Y02E 60/10

(86) International application number:
**PCT/JP2021/007311**

(87) International publication number:
**WO 2021/172509 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2020  JP 2020030445**

(71) Applicant: **SUMITOMO CHEMICAL COMPANY, LIMITED**
**Tokyo 103-6020 (JP)**

(72) Inventor: **INOUE, Masashi**
**Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **LITHIUM METAL COMPOSITE OXIDE, POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)   A lithium metal composite oxide having a layered structure, containing at least Li, Ni, and an element X, in which the element X is one or more elements selected from the group consisting of Co, Mn, Fe, Cu, Ti, Mg, Al, B, W, Mo, Nb, Zn, Sn, Zr, Ga, La, and V, and characteristic values obtained from adsorption isotherm measurement of nitrogen gas obtained by a gas adsorption method satisfy requirements (1) and (2).

**Description**

[Technical Field]

The present invention relates to a lithium metal composite oxide, a positive electrode active material for a lithium secondary battery, a positive electrode for a lithium secondary battery, and a lithium secondary battery.

Priority is claimed on Japanese Patent Application No. 2020-030445, filed in Japan on February 26, 2020, the content of which is incorporated herein by reference.

[Background Art]

Attempts of putting lithium secondary batteries into practical use not only for small-sized power sources in mobile phone applications, notebook personal computer applications, and the like but also for medium-sized or large-sized power sources in automotive applications, power storage applications, and the like have already been underway. Lithium secondary batteries have a positive electrode for a lithium secondary battery containing a positive electrode active material. As the positive electrode active material, a lithium metal composite oxide is used.

Well-known lithium metal composite oxides are composed of secondary particles formed by aggregation of primary particles. Secondary particles that are aggregates have a large number of pores. When a large number of pores are present, the contact area with electrolyte solution increases, and various battery performances are likely to improve.

When producing a lithium secondary battery, a positive electrode active material containing a lithium metal composite oxide and a conductive agent are mixed. Lithium metal composite oxides having a large proportion of secondary particles have a small surface area on the particle surfaces. Therefore, the amount of the conductive agent mixed needs to be increased in order to secure a sufficient conductive property. In such a case, the discharge capacity per mass and the discharge capacity per volume of the battery as a whole become small.

Under such background, attempts are underway to control the pore distribution or specific surface area of lithium metal composite oxides.

For example, Patent Document 1 describes a positive electrode active material for a non-aqueous electrolyte secondary battery in which, in pore distribution measurement by the nitrogen adsorption method, the average volume of pores having an average size of 40 nm or less is 0.001 to 0.008 cm$^3$/g.

In addition, Patent Document 2 describes a positive electrode in which a pore specific surface area (S1) measured by the mercury intrusion method and a pore volume (VI) obtained by pore distribution measurement satisfy a specific formula.

[Citation List]

[Patent Document]

[Patent Document 1]
JP-A-2007-257985
[Patent Document 2]
WO 2012/111813A1

[Summary of Invention]

[Technical Problem]

Incidentally, for example, in-vehicle batteries for an electric vehicle, there is a demand for not only a high capacity but also high-output characteristics, that is, high discharge rate characteristics to be exhibited.

Here, the discharge rate characteristics in the present specification are evaluated with a 5CA/1CA discharge capacity retention that is obtained using a discharge capacity when the battery is discharged at a constant current of 5CA and a discharge capacity when the battery is discharged at a constant current of 1CA from the following formula.

As the 5CA/1CA discharge capacity retention becomes higher, the discharge rate characteristics become higher, and lithium secondary batteries exhibit a higher output.

5CA/1CA discharge capacity retention (%)

= discharge capacity at 5CA/discharge capacity at 1CA x 100

The present invention has been made in view of the above-described circumstances, and an object of the present invention is to provide a lithium metal composite oxide having high discharge rate characteristics and high cycle characteristics, a positive electrode active material for a lithium secondary battery, a positive electrode for a lithium secondary battery, and a lithium secondary battery.

[Solution to Problem]

That is, the present invention includes the following inventions [1] to [10].

[1] A lithium metal composite oxide having a layered structure, containing at least Li, Ni, and an element X, in which the element X is one or more elements selected from the group consisting of Co, Mn, Fe, Cu, Ti, Mg, Al, B, W, Mo, Nb, Zn, Sn, Zr, Ga, La, and V, and characteristic values obtained from adsorption isotherm measurement of nitrogen gas obtained by a gas adsorption method satisfy the following (1) and (2).

(1): A total pore volume V obtained from an amount of nitrogen adsorbed when a relative pressure (p/p0) is 0.99 on an adsorption isotherm of the nitrogen gas satisfies 0.005 $cm^3$/g or less.
(2): A value of the following formula (A) satisfies 0.18 or more.

$$S/(V \times 1000) \cdots \text{Formula (A)}$$

(In the formula (A), S is a specific surface area (unit: $m^2$/g) of the lithium metal composite oxide obtained from a BET method. V is a total pore volume (unit: $cm^3$/g) of the lithium metal composite oxide obtained from an amount of nitrogen adsorbed at a relative pressure (p/p0) of 0.99 on the adsorption isotherm.)
[2] The lithium metal composite oxide according to [1], in which the following formula (I) is satisfied.

$$Li[Li_x(Ni_{(1-y-z-w)}Co_yMn_zM_w)_{1-x}]O_2 \cdots \qquad (I)$$

(here, $-0.1 \leq x \leq 0.2$, $0 \leq y \leq 0.4$, $0 \leq z \leq 0.4$, $0 \leq w \leq 0.1$, $y + z + w < 1$ are satisfied, and M represents one or more elements selected from the group consisting of Fe, Cu, Ti, Mg, Al, B, W, Mo, Nb, Zn, Sn, Zr, Ga, La, and V.)
[3] The lithium metal composite oxide according to [1] or [2], in which an average particle diameter $D_{50}$, which is a 50% cumulative diameter obtained from particle size distribution measurement, satisfies 1 $\mu$m or more and 10 $\mu$m or less.
[4] The lithium metal composite oxide according to any one of [1] to [3], in which, in the adsorption isotherm measurement of the nitrogen gas and the desorption isotherm measured subsequent to an adsorption isotherm, an area of a region formed between the adsorption isotherm and the desorption isotherm in a range where p/p0, which is the relative pressure, is 0.5 or more and 0.9 or less satisfies 0.02 $cm^3$/g or less.
[5] The lithium metal composite oxide according to any one of [1] to [4], in which, in pore distribution of pore sizes of 200 nm or less obtained from the adsorption isotherm measurement of the nitrogen gas, and a maximum value of a log differential pore volume satisfies 0.03 $cm^3$/(g·nm) or less.
[6] The lithium metal composite oxide according to any one of [1] to [5], in which the specific surface area S satisfies 0.1 $m^2$/g or more and 1.5 $m^2$/g or less.
[7] The lithium metal composite oxide according to any one of [1] to [6], in which a tapped density satisfies 1.2 $g/cm^3$ or more and 2.5 $g/cm^3$ or less.
[8] A positive electrode active material for a lithium secondary battery, containing the lithium metal composite oxide according to any one of [1] to [7].
[9] A positive electrode for a lithium secondary battery, containing the positive electrode active material for a lithium secondary battery according to [8].
[10] A lithium secondary battery having the positive electrode for a lithium secondary battery according to [9].

[Advantageous Effects of Invention]

According to the present invention, it is possible to provide a lithium metal composite oxide having high discharge rate characteristics and high cycle characteristics, a positive electrode active material for a lithium secondary battery, a positive electrode for a lithium secondary battery, and a lithium secondary battery.

[Brief Description of Drawings]

Fig. 1A is a schematic configuration view showing an example of a lithium secondary battery.
Fig. 1B is a schematic configuration view showing the example of the lithium secondary battery.
Fig. 2 is a graph illustrating a relationship between an amount of nitrogen gas adsorbed of a lithium metal composite oxide of Example 1 and a relative pressure.
Fig. 3 is a graph illustrating a relationship between an amount of nitrogen gas adsorbed of a lithium metal composite oxide of comparative Example 3 and a relative pressure.
Fig. 4 is a schematic view showing a laminate that an all-solid-state lithium-ion battery includes.
Fig. 5 is a schematic view showing an entire configuration of the all-solid-state lithium-ion battery.

[Description of Embodiments]

In the present specification, a metal composite compound will be hereinafter referred to as "MCC", a lithium metal composite oxide will be hereinafter referred to as "LiMO", and a positive electrode (cathode) active material for lithium secondary batteries will be hereinafter referred to as "CAM".

<LiMO>

The present embodiment is LiMO having a layered structure.
In one aspect of the present invention, LiMO is composed of primary particles alone.
In one aspect of the present invention, LiMO is composed of secondary particles that are aggregates of primary particles and primary particles that are present independently from the secondary particles.
In one aspect of the present invention, LiMO is a powder.
In the present embodiment, "primary particle" means a particle in which, apparently, no grain boundary is present when observing the particle in a visual field of 5000 times or more and 20000 times or less using a scanning electron microscope or the like.
In the present embodiment, "secondary particle" is a particle that is aggregation of the primary particles and means a particle having a spherical or substantially spherical shape.
In a case where LiMO is composed of secondary particles, which are aggregates of primary particles, and primary particles that are present independently of the secondary particles, the proportion of the number of the primary particles in the total of the number of the secondary particles and the number of the primary particles in LiMO is preferably 20% or more, more preferably 30% or more, and particularly preferably 50% or more. The upper limit thereof is not particularly limited, but is less than 100% and preferably 90% or less.
When the number of the primary particles is calculated, primary particles configuring the secondary particles are not counted, but only the number of primary particles that are present independently of the secondary particles is counted.
In the present embodiment, the proportion of the number of the primary particles in the total of the number of the secondary particles and the number of the primary particles in LiMO is obtained by the following method.
First, LiMO is placed on a conductive sheet attached onto a sample stage, and the primary particles and the secondary particles, which are aggregates of the primary particles, are dispersed so as to be present independently without being in contact with each other.
After that, using a scanning electron microscope (SEM, for example, JSM-5510 manufactured by JEOL Ltd.), the particles are irradiated with electron beams at an acceleration voltage of 20 kV, and SEM observation is carried out.
Next, 200 particles are randomly extracted from an image obtained by the SEM observation (SEM photograph) and regarded as the total of the number of the secondary particles and the number of the primary particles.
Next, the number of the primary particles that are contained in the 200 extracted particles and present independently of the secondary particles is calculated.
The obtained number of the primary particles is divided by the total of the number of the secondary particles and the number of the primary particles, thereby calculating the proportion of the number of the primary particles in the total of the number of the secondary particles and the number of the primary particles.
The magnification of the SEM photograph needs to be a photograph with a magnification large enough to specify the particle forms of LiMO, which is the subject, and a magnification of 1000 times or more and 30000 times or less is preferably used.

<Calculation method of content rate of primary particles present independently>

The LiMO powder is observed at 20000 times using a scanning electron microscope, and the numbers of the independently-present primary particles and the secondary particles in the observed visual field are each counted. The number of the primary particles is indicated by N1, the number of the secondary particles is indicated by N2, and the number proportion of the primary particles is calculated by N1/(N1 + N2) [%]. In a case where the number of observable particles is less than 50, a plurality of visual fields are continuously acquired and observed until 50 particles can be confirmed.

LiMO contains at least Li, Ni and an element X.

The element X is one or more elements selected from the group consisting of Co, Mn, Fe, Cu, Ti, Mg, Al, B, W, Mo, Nb, Zn, Sn, Zr, Ga, La, and V.

In LiMO, the characteristic values obtained from the adsorption isotherm measurement of nitrogen gas obtained by the gas adsorption method satisfy (1) and (2).

The gas adsorption method using nitrogen gas makes it possible to measure small-size pores having a pore size of 200 nm or less.

In the present specification, the term "pore" means a fine void that is connected from the outer surface of the secondary particle to the inside. Such a void is a space formed by the aggregation of the primary particles.

(1)

As (1), specifically, the total pore volume V obtained from the amount of nitrogen adsorbed when the relative pressure p/p0 is 0.99 on the adsorption isotherm of nitrogen gas satisfies 0.005 $cm^3$/g or less, preferably satisfies 0.004 $cm^3$/g or less, and more preferably satisfies 0.0035 $cm^3$/g or less. Hereinafter, the "total pore volume V" will be abbreviated as "V" in some cases.

LiMO having V of the above-described upper limit value or less means that LiMO has secondary particles having a small number of pores.

Ideally, V is preferably 0 $cm^3$/g, but preferably more than 0 $cm^3$/g in relation to a formula (A) in (2) described below, and, as examples of the lower limit value, 0.0001 $cm^3$/g or more and 0.0002 $cm^3$/g or more are exemplary examples.

The upper limit value and lower limit value of V can be randomly combined together.

As examples of the combination, V is 0 $cm^3$/g or more and 0.005 $cm^3$/g or less, more than 0 $cm^3$/g and 0.005 $cm^3$/g or less, 0.0001 $cm^3$/g or more and 0.004 $cm^3$/g or less, and 0.0002 $cm^3$/g or more and 0.003 $cm^3$/g or less.

[Measurement of V]

The adsorption isotherm and desorption isotherm of nitrogen gas can be measured by the following method.

First, 10 g of LiMO is degassed in a vacuum at 150°C for 8 hours using a vacuum heating treatment device.

After the vacuum degassing treatment, the adsorption isotherm of nitrogen and the desorption isotherm of nitrogen at a liquid nitrogen temperature (77 K) of LiMO are measured using an adsorption isotherm and desorption isotherm measuring device.

As the vacuum heating treatment device, for example, BELSORP-vacII manufactured by MicrotracBEL Corp. can be used.

As the adsorption isotherm and desorption isotherm measuring device, for example, BELSORP-mini manufactured by MicrotracBEL Corp. can be used.

The amount of nitrogen adsorbed per unit weight of LiMO on the adsorption isotherm is calculated so as to be expressed as the volume of gaseous nitrogen at the standard temperature and pressure (STP).

The amount of nitrogen desorbed per unit weight of LiMO on the desorption isotherm is calculated so as to be expressed as the volume of gaseous nitrogen at the standard temperature and pressure (STP).

The total pore volume is calculated from the following calculation formula using, as T $cm^3$ (STP)/g, the nitrogen adsorption amount when p/p0 is 0.99, which is the relative pressure of the adsorption isotherm.

In the following formula, the volume of 1 mol of gas at the standard temperature and pressure is set to 22414 $cm^3$, the molecular weight M of nitrogen is set to 28.013 g/mol, and the density $\rho$ of nitrogen in the liquid-phase state is set to 0.808 g/$cm^3$.

$$V \ (cm^3/g) = T/22414 \times M/\rho$$

A state where the relative pressure is 0.99, which is a state close to 1, is a pressure near the saturated vapor pressure. Therefore, it is considered that nitrogen causes capillary condensation in the pores and is present in an almost liquid phase state. The total pore volume can be obtained by converting the amount of nitrogen that is assumed to be in a liquid-phase state into the volume of gas at the standard temperature and pressure.

(2) In LiMO, the value of the following formula (A) satisfies 0.18 or more.

$$S/(V \times 1000) \cdots \text{Formula (A)}$$

(In the formula (A), S is a specific surface area (unit: $m^2/g$) obtained from the BET method. V is the total pore volume (unit: $cm^3/g$) obtained from the amount of nitrogen adsorbed at a relative pressure of 0.99 on the adsorption isotherm.)

The value of the formula (A) preferably satisfies 0.20 or more, more preferably satisfies 0.22 or more, and particularly preferably satisfies 0.24 or more. The upper limit value of the value of the formula (A) is not particularly limited, but is preferably less than 0.50.

When the value of the formula (A) is the above-described lower limit value or more, it means that the abundance of particles having a specific surface area derived from other than the pores larger than the specific surface area derived from the insides of the pores of the secondary particles is large.

Here, the expression "specific surface area derived from the insides of the pores" specifically means the specific surface area of the wall surfaces in the pores. The expression "specific surface area derived from other than the pores" specifically means the specific surface area of the surfaces of the primary particles or the secondary particles.

The upper limit value and lower limit value of the value of the formula (A) can be randomly combined together.

As examples of the combination, the value of the formula (A) is 0.20 or more and less than 0.50, 0.22 or more and less than 0.50, and 0.24 or more and less than 0.50.

In the formula (A), V is calculated by using the method described in the above-described [Measurement of V].

[Measurement of S]

In the formula (A), S is obtained by measuring the nitrogen adsorption isotherm of LiMO. Specifically, S is calculated by the BET multipoint method using the measurement values of the amount of nitrogen adsorbed at relative pressures of up to 0.4 (unit: $m^2/g$). The amounts of nitrogen adsorbed at the relative pressures of up to 0.4 are measured in a process where the relative pressure in the total pore volume measurement of (1) reaches 0.99.

LiMO satisfying (1) means that the pore volume is small, that is, the number of spaces formed by the aggregation of the primary particles is small.

In addition, LiMO satisfying (2) means that the proportion of the specific surface area derived from the insides of the pores is small and the specific surface area derived from other than the pores is large in the specific surface area of the primary particles or the secondary particles.

This means that the amount of the secondary particles, which are the aggregates of the primary particles, present is small, and the amount of the independently-present primary particles present is large.

It is difficult for a conductive material to enter the insides of the pores having a size satisfying (1). The conductive material incapable of entering the insides of the pores is present on the surfaces of the pores.

LiMO satisfying (2) has a large surface area derived from other than the pores, and LiMO and the conductive material are capable of coming into contact with each other on the surfaces of the primary particles or the surfaces of the secondary particles. Therefore, it is considered that the contact frequency between LiMO and the conductive material is likely to sufficiently increase.

When LiMO of the present embodiment is used as a positive electrode active material, the contact efficiency with a conductive agent is likely to improve. Therefore, the interfacial resistance between the positive electrode active material and the conductive agent decreases, and the discharge rate characteristics and the cycle characteristics improve.

«Specific surface area S»

S preferably satisfies 0.1 $m^2/g$ or more, more preferably satisfies 0.2 $m^2/g$ or more, and more preferably satisfies 0.3 $m^2/g$ or more.

S preferably satisfies 1.5 $m^2/g$ or less, more preferably satisfies 1.2 $m^2/g$ or less, and particularly preferably satisfies 1.0 $m^2/g$ or less.

The upper limit value and the lower limit value can be randomly combined together. As examples of the combination, S is 0.1 $m^2/g$ or more and 1.5 $m^2/g$ or less, 0.2 $m^2/g$ or more and 1.2 $m^2/g$ or less, and 0.3 $m^2/g$ or more and 1.0 $m^2/g$ or less.

«Composition formula»

LiMO of the present embodiment preferably satisfies the following formula (I).

$$Li[Li_x(Ni_{(i-y-z-w)}Co_yMn_zM_w)_{1-x}]O_2 \cdots \qquad (I)$$

(Here, $-0.1 \leq x \leq 0.2$, $0 \leq y \leq 0.4$, $0 \leq z \leq 0.4$, $0 \leq w \leq 0.1$, $y + z + w < 1$ are satisfied, and M represents one or more elements selected from the group consisting of Fe, Cu, Ti, Mg, Al, W, B, Mo, Nb, Zn, Sn, Zr, Ga, La, and V.)

(Regarding x)

From the viewpoint of obtaining a lithium secondary battery having favorable cycle characteristics, x in the composition formula (I) is preferably more than 0, more preferably 0.01 or more, and still more preferably 0.02 or more. In addition, from the viewpoint of obtaining a lithium secondary battery having a higher initial coulombic efficiency, x in the composition formula (I) is preferably 0.15 or less and more preferably 0.10 or less.
In the present specification, the expression "cycle characteristics are favorable" means a characteristic in which the amount of the battery capacity decreased by the repetition of charging and discharging is low, and means that the ratio of the capacity when measured again to the initial capacity is unlikely to decrease.
In addition, in the present specification, the term "initial coulombic efficiency" is a value obtained by "(initial discharge capacity)/(initial charge capacity) x 100 (%)". A secondary battery having a high initial coulomb efficiency has a small irreversible capacity at the time of initial charge and discharge, and the capacity per volume and weight is likely to become larger.
The upper limit value and lower limit value of x can be randomly combined together. In the composition formula (I), x may be -0.1 or more and 0.15 or less and may be -0.1 or more and 0.10 or less.
x may be more than 0 and 0.20 or less, may be more than 0 and 0.15 or less, and may be more than 0 and 0.10 or less.
x may be 0.01 or more and 0.20 or less, may be 0.01 or more and 0.15 or less, and may be 0.01 or more and 0.10 or less.
x may be 0.02 or more and 0.2 or less, may be 0.02 or more and 0.15 or less, and may be 0.02 or more and 0.10 or less.
It is preferable that x satisfies $0 < x \leq 0.20$.

(Regarding y)

In addition, from the viewpoint of obtaining a lithium secondary battery having a low battery internal resistance, y in the composition formula (I) is preferably more than 0, more preferably 0.005 or more, still more preferably 0.01 or more, and particularly preferably 0.05 or more. In addition, from the viewpoint of obtaining a lithium secondary battery having high thermal stability, y in the composition formula (I) is preferably 0.35 or less, more preferably 0.33 or less, and still more preferably 0.30 or less.
The upper limit value and lower limit value of y can be randomly combined together. In the composition formula (I), y may be 0 or more and 0.35 or less, may be 0 or more and 0.33 or less and may be 0 or more and 0.30 or less.
y may be more than 0 and 0.40 or less, may be more than 0 and 0.35 or less, may be more than 0 and 0.33 or less, and may be more than 0 and 0.30 or less.
y may be 0.005 or more and 0.40 or less, may be 0.005 or more and 0.35 or less, may be 0.005 or more and 0.33 or less, and may be 0.005 or more and 0.30 or less.
y may be 0.01 or more and 0.40 or less, may be 0.01 or more and 0.35 or less, may be 0.01 or more and 0.33 or less, and may be 0.01 or more and 0.30 or less.
y may be 0.05 or more and 0.40 or less, may be 0.05 or more and 0.35 or less, may be 0.05 or more and 0.33 or less, and may be 0.05 or more and 0.30 or less.
It is preferable that y satisfies $0 < y \leq 0.40$.
In the composition formula (I), it is more preferable to satisfy $0 < x \leq 0.10$ and $0 < y \leq 0.40$.

(Regarding z)

In addition, from the viewpoint of obtaining a lithium secondary battery having high cycle characteristics, z in the composition formula (I) is preferably 0.01 or more, more preferably 0.02 or more, and still more preferably 0.1 or more. In addition, from the viewpoint of obtaining a lithium secondary battery having high preservability at high temperatures (for example, in an environment at 60°C), z in the composition formula (I) is preferably 0.39 or less, more preferably 0.38 or less, and still more preferably 0.35 or less.

The upper limit value and lower limit value of z can be randomly combined together. In the composition formula (I), z may be 0 or more and 0.39 or less, may be 0 or more and 0.38 or less and may be 0 or more and 0.35 or less.

z may be 0.01 or more and 0.40 or less, may be 0.01 or more and 0.39 or less, may be 0.01 or more and 0.38 or less, and may be 0.01 or more and 0.35 or less.

z may be 0.02 or more and 0.40 or less, may be 0.02 or more and 0.39 or less, may be 0.02 or more and 0.38 or less, and may be 0.02 or more and 0.35 or less.

z may be 0.10 or more and 0.40 or less, may be 0.10 or more and 0.39 or less, may be 0.10 or more and 0.38 or less, and may be 0.10 or more and 0.35 or less.

(Regarding w)

In addition, from the viewpoint of obtaining a lithium secondary battery having a low battery internal resistance, w in the composition formula (I) is preferably more than 0, more preferably 0.0005 or more, and still more preferably 0.001 or more. In addition, from the viewpoint of obtaining a lithium secondary battery having a large discharge capacity at a high current rate, w in the composition formula (I) is preferably 0.09 or less, more preferably 0.08 or less, and still more preferably 0.07 or less.

The upper limit value and lower limit value of w can be randomly combined together. In the composition formula (I), w may be 0 or more and 0.09 or less, may be 0 or more and 0.08 or less and may be 0 or more and 0.07 or less.

w may be more than 0 and 0.10 or less, may be more than 0 and 0.09 or less, may be more than 0 and 0.08 or less, and may be more than 0 and 0.07 or less.

w may be 0.0005 or more and 0.10 or less, may be 0.0005 or more and 0.09 or less, may be 0.0005 or more and 0.08 or less, and may be 0.0005 or more and 0.07 or less.

w may be 0.001 or more and 0.10 or less, may be 0.001 or more and 0.09 or less, may be 0.001 or more and 0.08 or less, and may be 0.001 or more and 0.07 or less.

(Regarding y + z + w)

In addition, from the viewpoint of obtaining a lithium secondary battery having a large battery capacity, y + z + w in the composition formula (I) preferably satisfies 0.50 or less, more preferably satisfies 0.25 or less, and still more preferably satisfies 0.20 or less.

(Regarding M)

M in the composition formula (I) is one or more elements selected from the group consisting of Fe, Cu, Ti, Mg, Al, W, B, Mo, Nb, Zn, Sn, Zr, Ga, La, and V.

In addition, from the viewpoint of obtaining a lithium secondary battery having high cycle characteristics, M in the composition formula (I) is preferably one or more elements selected from the group consisting of Ti, Mg, Al, W, B, and Zr and more preferably one or more elements selected from the group consisting of Al and Zr. In addition, from the viewpoint of obtaining a lithium secondary battery having high thermal stability, M is preferable one or more elements selected from the group consisting of Ti, Al, W, B, and Zr.

An example of a preferable combination of x, y, z, and w described above is x of 0.02 or more and 0.3 or less, y of 0.05 or more and 0.30 or less, z of 0.02 or more and 0.35 or less, and w of 0 or more and 0.07 or less. Examples thereof include LiMO in which x = 0.05, y = 0.20, z = 0.30, and w = 0, LiMO in which x = 0.05, y = 0.08, z = 0.04, and w = 0 and LiMO in which x = 0.25, y = 0.07, z = 0.02, and w = 0.

[Composition analysis]

The composition analysis of LiMO was carried out using an ICP emission spectroscopic analyzer (SPS 3000, manufactured by Seiko Instruments Inc.) after the obtained LiMO powder was dissolved in hydrochloric acid.

«Average particle diameter»

In LiMO, the average particle diameter $D_{50}$, which is a 50% cumulative diameter obtained from particle size distribution measurement, preferably satisfies 1 $\mu$m or more and 10 $\mu$m or less. The upper limit value of the average particle diameter $D_{50}$ is more preferably 8 $\mu$m or less and still more preferably 7 $\mu$m or less. The lower limit value of the average particle diameter $D_{50}$ is more preferably 1.5 $\mu$m or more and still more preferably 2 $\mu$m or more.

The upper limit value and lower limit value of $D_{50}$ can be randomly combined together. As examples of the

combinations, $D_{50}$ is 1.5 $\mu$m or more and 8 $\mu$m or less and 2 $\mu$m or more and 7 $\mu$m or less.

[Measurement of average particle diameter $D_{50}$]

The cumulative particle size of LiMO is measured using the following method. Hereinafter, the "volume-based cumulative particle size" can be measured by a measurement method in which the laser diffraction scattering method is a measurement principle. Particle size distribution measurement in which the laser diffraction scattering method is a measurement principle is referred to as "laser diffraction type particle size distribution measurement".

First, 0.1 g of the LiMO powder is put into 50 ml of 0.2 mass% sodium hexametaphosphate aqueous solution to obtain a dispersion liquid in which the LiMO powder is dispersed.

Next, the particle size distribution of the obtained dispersion liquid is measured using a laser diffraction scattering particle size distribution measuring device to obtain a volume-based cumulative particle size distribution curve. The measurement range of the particle size distribution needs to be set to 0 $\mu$m or more and 2000 $\mu$m or less.

As the laser diffraction scattering particle size distribution measuring device, for example, Microtrac MT3300EXII manufactured by MicrotracBEL Corp. can be used.

In the obtained cumulative particle size distribution curve, the value of the particle diameter at a point where the cumulative volume from the fine particle side reaches 50% when the entire cumulative volume is set to 100% is defined as the 50% cumulative volume particle diameter $D_{50}$ ($\mu$m).

«Area of region formed between adsorption isotherm and desorption isotherm»

[Measurement of S1]

The area of a region formed between the adsorption isotherm and the desorption isotherm at p/p0, which is the relative pressures, in a range of 0.5 or more and 0.9 or less is S1.

In order to obtain S1, specifically, first, integration is carried out at p/p0, which is the relative pressures, in a range of 0.5 or more and 0.9 or less, and the area of the desorption isotherm and the area of the adsorption isotherm are obtained.

Next, the area of the adsorption isotherm is subtracted from the area of the desorption isotherm, and the difference is defined as S1.

S1 preferably satisfies 0.02 $cm^3$/g or less, more preferably satisfies 0.005 $cm^3$/g or less, and particularly preferably satisfies 0.003 $cm^3$/g or less.

S1 preferably satisfies 0 $cm^3$/g or more.

As examples of the combination of the upper limit value and lower limit value of S1, S1 is 0 $cm^3$/g or more and 0.02 $cm^3$/g or less, 0 $cm^3$/g or more and 0.005 $cm^3$/g or less, and 0 $cm^3$/g or more and 0.003 $cm^3$/g or less.

In a case where the powder, which is the measurement subject, has pores, the amount of nitrogen molecules adsorbed includes nitrogen molecules captured in a condensed state in the pores due to capillary condensation. It is difficult to desorb gas molecules captured in pores even when the gas partial pressure is reduced. Therefore, a difference is caused between the adsorption isotherm and the desorption isotherm.

For example, in a case where the pore in the powder, which is the measurement subject, has a bottleneck shape, a difference in inner size is caused between the inner size of the widest portion in the pore space and the inner size of the bottleneck portion, and, as the difference in inner size increases, the hysteresis seen between the adsorption isotherm and the desorption isotherm becomes larger. In the present specification, the bottleneck shape means the constricted portion of a pore. The bottleneck portion means the portion having the smallest inner size in the constricted portion of the pore.

On the other hand, in LiMO, not only the number of 200 nm or less small pores, which are measured by the gas adsorption method, is small, but the abundance of bottleneck-shaped pores is also small in the inside of the secondary particles, between the primary particles that do not configure the secondary particles, and between the secondary particles.

That is, the above-described difference in inner sizes is small, and a difference is less likely to be caused between the adsorption isotherm and the desorption isotherm. Therefore, S1 is likely to become the above-described upper limit value or less.

«log differential pore volume»

In the pore distribution of LiMO obtained from the adsorption isotherm measurement of the nitrogen gas, the maximum value of a log differential pore volume distribution in a region where the pore sizes are 200 nm or less preferably satisfies 0.03 $cm^3$/(g·nm) or less, more preferably satisfies 0.02 $cm^3$/(g·nm) or less, and still more preferably satisfies

0.01 $cm^3/(g \cdot nm)$ or less.

The maximum value of the log differential pore volume may be 0.001 $cm^3/(g \cdot nm)$ or more, 0.002 $cm^3/(g \cdot nm)$ or more, and 0.003 $cm^3/(g \cdot nm)$ or more.

The upper limit value and the lower limit value can be randomly combined together.

As examples of the combination, 0.001 $cm^3/(g \cdot nm)$ or more and 0.03 $cm^3/(g \cdot nm)$ or less, 0.002 $cm^3/(g \cdot nm)$ or more and 0.02 $cm^3/(g \cdot nm)$ or less, and 0.003 $cm^3/(g \cdot nm)$ or more and 0.01 $cm^3/(g \cdot nm)$ or less are exemplary examples.

When the maximum value of the log differential pore volume peak is the above-described upper limit value or less, it means that the proportion of particles in which the number of small pores having a pore size, which is measured by the gas adsorption method, of 200 nm or less is small is large.

[Measurement of peak maximum value of log differential pore volume]

The log differential pore volume is analyzed using the BJH method from the adsorption isotherm of the nitrogen gas. In the region where the pore sizes are 200 nm or less, the maximum value of the peaks of the log differential pore volume is obtained from the cumulative curve of the pore size and the pore volume.

«Tapped density»

The tapped density of LiMO preferably satisfies 1.2 $g/cm^3$ or more and 2.5 $g/cm^3$ or less. The lower limit value of the tapped density is preferably 1.4 $g/cm^3$ or more and particularly preferably 1.5 $g/cm^3$ or more. In addition, the upper limit value of the tapped density is more preferably 2.3 $g/cm^3$ or less and particularly preferably 2.2 $g/cm^3$ or less. The upper limit value and the lower limit value can be randomly combined together.

As examples of the combination, the tapped density is 1.4 $g/cm^3$ or more and 2.3 $g/cm^3$ or less and 1.5 $g/cm^3$ or more and 2.2 $g/cm^3$ or less.

[Measurement method of tapped density]

As the tapped density, a value obtained by the method described in JIS R 1628-1997 is used.

(Layered structure)

The crystal structure of LiMO is a layered structure and more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3cl, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, and C2/c.

Among these, in order to obtain a lithium secondary battery having a high discharge capacity, the crystal structure is particularly preferably a hexagonal crystal structure belonging to the space group R-3m or a monoclinic crystal structure belonging to C2/m.

<Production method for LiMO>

A production method for LiMO of the present embodiment will be described.

The production method for LiMO is preferably a production method including the following (1), (2), and (3) in this order.

    (1) A production step for a precursor of LiMO
    (2) A mixing step of mixing the precursor and a lithium compound to obtain a mixture
    (3) A step of calcining the mixture to obtain LiMO

[(1) Production step for precursor of LiMO]

First, a precursor of LiMO is produced.

The precursor is MCC containing metals except for lithium among metals configuring LiMO, which is a target product. Specifically, MCC is nickel-containing MCC containing nickel, which is an essential metal, and the element X, which is an optional metal. As the nickel-containing MCC, which is the precursor, a nickel-containing metal composite hydroxide or a nickel-containing metal composite oxide can be used.

Usually, the precursor can be produced by a well-known coprecipitation method. As the coprecipitation method, a batch-type coprecipitation method or a continuous coprecipitation method can be used.

Hereinafter, the production method will be described in detail using a nickel cobalt manganese metal composite hydroxide containing nickel, cobalt, and manganese as metals as an example. The nickel cobalt manganese metal composite hydroxide will be hereinafter referred to as "metal composite hydroxide" in some cases.

First, a nickel salt solution, a cobalt salt solution, a manganese salt solution, and a complexing agent are reacted with one another by a coprecipitation method, particularly, the continuous coprecipitation method described in JP-A 2002-201028, thereby producing a metal composite hydroxide represented by $Ni_{(1-y-z)}Co_yMn_z(OH)_2$ (in the formula, $y + z = 1$).

A nickel salt that is a solute of the nickel salt solution is not particularly limited, and, for example, any one of nickel sulfate, nickel nitrate, nickel chloride, and nickel acetate can be used.

As a cobalt salt that is a solute of the cobalt salt solution, for example, any of cobalt sulfate, cobalt nitrate, cobalt chloride, and cobalt acetate can be used.

As a manganese salt that is a solute of the manganese salt solution, for example, any of manganese sulfate, manganese nitrate, manganese chloride, and manganese acetate can be used.

The above-described metal salts are used in proportions corresponding to the composition ratio of $Ni_{(1-y-z)}Co_yMn_z(OH)_2$.

That is, the individual metal salts are used in amounts in which the mole ratio among nickel in the solute of the nickel salt solution, cobalt in the solute of the cobalt salt solution, and manganese in the solute of the manganese salt solution corresponds to the composition ratio of $Ni_{(1-y-z)}Co_yMn_z$ and becomes $(1 - y - z):y:z$.

In addition, the solvents of the nickel salt solution, the cobalt salt solution, and the manganese salt solution are water.

The complexing agent is a compound capable of forming a complex with a nickel ion, a cobalt ion, and a manganese ion in an aqueous solution.

As examples of the complexing agent, an ammonium ion feeder, hydrazine, ethylenediaminetetraacetic acid, nitrilotriacetic acid, uracil diacetic acid, and glycine are exemplary examples. As the ammonium ion feeder, ammonium sulfate, ammonium chloride, ammonium carbonate, and ammonium fluoride are exemplary examples.

In the production step of the precursor, the complexing agent may or may not be used.

In a case where the complexing agent is used, regarding the amount of the complexing agent that is contained in the liquid mixture containing the nickel salt solution, the metal salt solution of the element X, and the complexing agent, for example, the mole ratio of the complexing agent to the sum of the mole numbers of the metal salts is more than 0 and 2.0 or less.

Regarding the amount of the complexing agent that is contained in the liquid mixture containing the nickel salt solution, the cobalt salt solution, the manganese salt solution, and the complexing agent, for example, the mole ratio of the complexing agent to the sum of the mole numbers of the metal salts is more than 0 and 2.0 or less.

In the coprecipitation method, in order to adjust the pH value of the liquid mixture containing the nickel salt solution, a random metal salt solution, and the complexing agent, an alkali metal hydroxide is added to the liquid mixture before the pH of the liquid mixture turns from alkaline into neutral. The alkali metal hydroxide is, for example, sodium hydroxide or potassium hydroxide.

The value of the pH in the present specification is defined as a value measured when the temperature of the liquid mixture is 40°C. The pH of the liquid mixture is measured when the temperature of the liquid mixture sampled from a reaction vessel reaches 40°C.

In a case where the temperature of the sampled liquid mixture is lower than 40°C, the liquid mixture is heated, and the pH is measured when the temperature has reached 40°C.

In a case where the temperature of the sampled liquid mixture is higher than 40°C, the liquid mixture is cooled, and the pH is measured when the temperature has reached 40°C.

When the complexing agent in addition to the nickel salt solution, the cobalt salt solution, and the manganese salt solution is continuously supplied to the reaction vessel, nickel, cobalt, and manganese react with one another, and $Ni_{(1-y-z)}Co_yMn_z(OH)_2$ is generated.

At the time of the reaction, the temperature of the reaction vessel is controlled to a range of, for example, 20°C or higher and 80°C or lower and preferably 30°C or higher and 70°C or lower.

In addition, the pH value in the reaction vessel is set within a range of, for example, pH 9 or higher and pH 13 or lower and preferably pH 10 or higher and pH 12.5 or lower when the temperature of the aqueous solution is 40°C, and the pH is controlled within ±0.5.

The substances in the reaction vessel are appropriately stirred and mixed together.

As the reaction vessel that is used in the continuous coprecipitation method, it is possible to use a reaction vessel in which the formed reaction precipitate is caused to overflow for separation.

The inside of the reaction vessel may be an inert atmosphere. An inert atmosphere inside the reaction vessel makes it difficult for, among the metals that are contained in the liquid mixture, a metal that is more easily oxidized than nickel to be aggregated earlier than nickel. Therefore, a uniform metal composite hydroxide is likely to be obtained.

In addition, the inside of the reaction vessel may be an appropriate oxidizing atmosphere. The oxidizing atmosphere may be an oxygen-containing atmosphere formed by mixing an oxidizing gas into an inert gas, and, when the inside of the reaction vessel, in which an oxidizing agent may be present in an inert gas atmosphere, is an appropriate oxidizing atmosphere, a transition metal that is contained in the liquid mixture is appropriately oxidized, which makes it easy to control the form of the metal composite oxide.

As oxygen or the oxidizing agent in the oxidizing atmosphere, a sufficient number of oxygen atoms need to be present in order to oxidize the transition metal.

In a case where the oxidizing atmosphere is an oxygen-containing atmosphere, the atmosphere in the reaction vessel can be controlled by aeretion of the oxidizing gas in the reaction vessel, bubbling the oxidizing gas in the mixed solution, or the like.

After the above-described reaction, the obtained reaction precipitate is washed and then dried, thereby obtaining a metal composite hydroxide as the precursor.

In addition, in a case where impurities derived from the liquid mixture remain in the reaction precipitate that is washed with only water, the reaction precipitate may be washed with a weak acid water or an alkaline solution as necessary. As the alkaline solution, an aqueous solution containing sodium hydroxide or potassium hydroxide can be an exemplary example.

After the above reaction, the obtained reaction precipitate is washed and then dried, thereby obtaining a metal composite hydroxide as a nickel cobalt manganese composite compound.

In addition, in a case where impurities derived from the liquid mixture remain in the reaction precipitate that is washed with only water, the reaction precipitate may be washed with a weak acid water or an alkaline solution as necessary. As the alkaline solution, an aqueous solution containing sodium hydroxide or potassium hydroxide can be an exemplary example.

In the above-described example, the metal composite hydroxide is produced, but a metal composite oxide may also be prepared. For example, a metal composite oxide can be prepared by oxidizing the metal composite hydroxide.

Regarding the drying time, the total time taken while the temperature begins to be raised and reaches the heating temperature and the holding of the composite metal hydroxide at the heating temperature ends is preferably set to one hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature at the time of beginning to raise the temperature and the highest holding temperature in the calcining furnace of the calcining device.

As a method for isolating the precursor from the reaction precipitate, a method in which a slurry containing the reaction precipitate (co-precipitate slurry) is dehydrated by centrifugation, suction filtration, or the like is preferably used.

The co-precipitate obtained by the dehydration is preferably washed with water or a washing liquid containing an alkali. In the present embodiment, the co-precipitate is preferably washed with a washing liquid containing an alkali and more preferably washed with a sodium hydroxide solution. In addition, the co-precipitate obtained by the dehydration may be washed using a washing liquid containing a sulfur element. As the washing liquid containing a sulfur element, a sulfate aqueous solution of potassium or sodium is an exemplary example.

[(2) Mixing step of mixing precursor and lithium compound to obtain mixture]

The present step is a step of mixing a lithium compound and the precursor to obtain a mixture.
• Lithium compound

As the lithium compound, it is possible to use any one of lithium carbonate, lithium nitrate, lithium acetate, lithium hydroxide, lithium oxide, lithium chloride, and lithium fluoride or a mixture of two or more thereof. Among these, any one or both of lithium hydroxide and lithium carbonate are preferable.

In addition, in a case where lithium hydroxide contains lithium carbonate as an impurity, the content of lithium carbonate in lithium hydroxide is preferably 5 mass% or less.

The method for mixing the precursor and the lithium compound will be described.

The precursor is dried and then mixed with the lithium compound. The drying conditions are not particularly limited, and, for example, any of the following drying conditions 1) to 3) is an exemplary example.

1) Condition under which precursor is not oxidized or reduced. Specifically, a drying condition under which an oxide remains as an oxide as it is or a drying condition under which a hydroxide remains as a hydroxide as it is.

2) Condition under which precursor is oxidized. Specifically, a drying condition under which a hydroxide is oxidized to an oxide.

3) Condition under which precursor is reduced. Specifically, a drying condition under which an oxide is reduced to a hydroxide.

The drying conditions 1) to 3) need to be appropriately selected depending on whether nickel-containing MCC to be produced is a nickel-containing metal composite hydroxide or a nickel-containing metal composite oxide.

In order for the condition under which the precursor is not oxidized or reduced, an inert gas such as nitrogen, helium, or argon may be used in the atmosphere during the drying. In the condition under which a hydroxide is oxidized, the hydroxide is dried using oxygen or an air.

In addition, as the condition under which the precursor is reduced, a reducing agent such as hydrazine or sodium sulfite may be used in an inert gas atmosphere.

After dried, the precursor may be appropriately classified.

The above-described lithium compound and precursor are mixed in consideration of the composition ratio of a final target product. For example, in the case of using a nickel cobalt manganese metal composite hydroxide, the lithium compound and the nickel cobalt manganese metal composite hydroxide are mixed in fractions that correspond to the composition ratio of $Li[Li_r(Ni_{(1-yz)}Co_yMn_z)_{1-r}]O_2$ (in the formula, y + z = 1).

The mixture of the nickel cobalt manganese metal composite hydroxide and the lithium compound is calcined in a subsequent calcining step, whereby a lithium-nickel cobalt manganese metal composite oxide is obtained.

From the viewpoint of obtaining a uniform lithium-nickel cobalt manganese metal composite oxide, r is preferably more than 0, more preferably 0.01 or more, and still more preferably 0.02 or more. In addition, from the viewpoint of obtaining a highly pure lithium-nickel cobalt manganese composite oxide, r is preferably 0.1 or less, more preferably 0.08 or less, and still more preferably 0.06 or less.

The upper limit value and lower limit value of the r can be randomly combined together.

[(3) Step of calcining mixture to obtain LiMO]

The mixture of the lithium compound and the precursor is calcined.

The mixture of the lithium compound and the precursor is preferably calcined in the presence of an inert melting agent.

Calcining of the mixture in the presence of an inert melting agent makes it possible to accelerate the reaction of the mixture. The inert melting agent may remain in the calcined product after calcining, or may be removed by washing the calcined product with a washing liquid or the like. The calcined product after calcining is preferably washed with pure water, an alkaline washing liquid, or the like.

Usually, there is a tendency that, as the holding temperature becomes higher, the particle diameters become larger. The holding temperature in the calcining may be appropriately adjusted depending on the kind of a transition metal element used and the kinds and amounts of a precipitant and the inert melting agent.

The calcining temperature may be set in consideration of the melting point of the inert melting agent, which will be described below, and is preferably set in a range of the melting point of the inert melting agent minus 200°C or higher and the melting point of the inert melting agent plus 200°C or lower.

As the calcining temperature, specifically, a range of 200°C or higher and 1150°C or lower is an exemplary example, and the calcining temperature is preferably 300°C or higher and 1050°C or lower and more preferably 500°C or higher and 1000°C or lower.

The holding time in the calcining may be appropriately adjusted depending on the kind of a transition metal element used and the kinds and amounts of a precipitant and the inert melting agent.

When the calcining temperature is the above-described lower limit value or more, it is possible to obtain LiMO having a strong crystal structure. In addition, when the calcining temperature is the above-described upper limit value or lower, it is possible to reduce the volatilization of lithium.

In the present specification, the calcining temperature means the temperature of the atmosphere in a calcining furnace and means the highest temperature of the holding temperatures in the calcining step (hereinafter, referred to as the highest holding temperature in some cases). In the case of the calcining step having a plurality of heating steps, the calcining temperature means a temperature when the precursor and the liquid compound are heated at the highest holding temperature in each of the heating steps.

Specifically, as the time during which the mixture is held at the calcining temperature, 0.1 hour or longer and 20 hours or shorter is an exemplary example, and 0.5 hours or longer and 10 hours or shorter is preferable. The temperature rising rate up to the calcining temperature is usually 50 °C/hour or faster and 400 °C/hour or slower, and the temperature lowering rate from the calcining temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

The temperature rising rate in the heating step until the highest holding temperature is reached is preferably 180 °C/hour or faster, more preferably 200 °C/hour or faster, and particularly preferably 250 °C/hour or faster.

The temperature rising rate in the heating step in which the highest holding temperature is reached is calculated from the time taken while the temperature begins to be raised and then reaches a holding temperature to be described below in the calcining device.

The inert melting agent is not particularly limited as long as the inert melting agent does not easily react with the mixture during the calcining. For example, one or more selected from the group consisting of a fluoride of one or more elements selected from the group consisting of Na, K, Rb, Cs, Ca, Mg, Sr, and Ba (hereinafter, referred to as "A"), a chloride of A, a carbonate of A, a sulfate of A, a nitrate of A, a phosphate of A, a hydroxide of A, a molybdate of A, and A of tungstate are exemplary examples.

As the fluoride of A, NaF (melting point: 993°C), KF (melting point: 858°C), RbF (melting point: 795°C), CsF (melting point: 682°C), $CaF_2$ (melting point: 1402°C), $MgF_2$ (melting point: 1263°C), $SrF_2$ (melting point: 1473°C), and $BaF_2$ (melting point: 1355°C) can be exemplary examples.

As the chloride of A, NaCl (melting point: 801°C), KCl (melting point: 770°C), RbCl (melting point: 718°C), CsCl (melting point: 645°C), $CaCl_2$ (melting point: 782°C), $MgCl_2$ (melting point: 714°C), $SrCl_2$ (melting point: 857°C), and $BaCl_2$ (melting point: 963°C) can be exemplary examples.

As the carbonate of A, $Na_2CO_3$ (melting point: 854°C), $K_2CO_3$ (melting point: 899°C), $Rb_2CO_3$ (melting point: 837°C), $Cs_2CO_3$ (melting point: 793°C), $CaCO_3$ (melting point: 825°C), $MgCO_3$ (melting point: 990°C), $SrCO_3$ (melting point: 1497°C), and $BaCO_3$ (melting point: 1380°C) can be exemplary examples.

As the sulfate of A, $Na_2SO_4$ (melting point: 884°C), $K_2SO_4$ (melting point: 1069°C), $Rb_2SO_4$ (melting point: 1066°C), $Cs_2SO_4$ (melting point: 1005°C), $CaSO_4$ (melting point: 1460°C), $MgSO_4$ (melting point: 1137°C), $SrSO_4$ (melting point: 1605°C), and $BaSO_4$ (melting point: 1580°C) can be exemplary examples.

As the nitrate of A, $NaNO_3$ (melting point: 310°C), $KNO_3$ (melting point: 337°C), $RbNO_3$ (melting point: 316°C), $CsNO_3$ (melting point: 417°C), $Ca(NO_3)_2$ (melting point: 561°C), $Mg(NO_3)_2$, $Sr(NO_3)_2$ (melting point: 645°C), and $Ba(NO_3)_2$ (melting point: 596°C) can be exemplary examples.

As the phosphate of A, $Na_3PO_4$, $K_3PO_4$ (melting point: 1340°C), $Rb_3PO_4$, $Cs_3PO_4$, $Ca_3(PO_4)_2$, $Mg_3(PO_4)_2$, (melting point: 1184°C), $Sr_3(PO_4)_2$ (melting point: 1727°C), and $Ba_3(PO_4)_2$ (melting point: 1767°C) can be exemplary examples.

As the hydroxide of A, NaOH (melting point: 318°C), KOH (melting point: 360°C), RbOH (melting point: 301°C), CsOH (melting point: 272°C), $Ca(OH)_2$ (melting point: 408°C), $Mg(OH)_2$ (melting point: 350°C), $Sr(OH)_2$ (melting point: 375°C), and $Ba(OH)_2$ (melting point: 853°C) can be exemplary examples.

As the molybdate of A, $Na_2MoO_4$ (melting point: 698°C), $K_2MoO_4$ (melting point: 919°C), $Rb_2MoO_4$ (melting point: 958°C), $Cs_2MoO_4$ (melting point: 956°C), $CaMoO_4$ (melting point: 1520°C), $MgMoO_4$ (melting point: 1060°C), $SrMoO_4$ (melting point: 1040°C), and $BaMoO_4$ (melting point: 1460°C) can be exemplary examples.

As the tungstate of A, $Na_2WO_4$ (melting point: 687°C), $K_2WO_4$, $Rb_2WO_4$, $Cs_2WO_4$, $CaWO_4$, $MgWO_4$, $SrWO_4$, and $BaWO_4$ can be exemplary examples.

Two or more of these inert melting agents can also be used. In the case of using two or more inert melting agents, there are also cases where the melting point decreases. In addition, among these inert melting agents, as an inert melting agent for obtaining LiMO having higher crystallinity, any of the carbonate of A, the sulfate of A, and the chloride of A or a combination thereof is preferable. In addition, A is preferably any one or both of sodium (Na) and potassium (K). That is, among the above-described inert melting agents, a particularly preferable inert melting agent is one or more selected from the group consisting of NaOH, KOH, NaCl, KCl, $Na_2CO_3$, $K_2CO_3$, $Na_2SO_4$, and $K_2SO_4$.

As the inert melting agent, potassium sulfate or sodium sulfate is preferable.

The calcined product after calcining preferably has a step of washing the calcined product with pure water, an alkaline washing liquid, or the like. The washing step makes it possible to remove the inert melting agent.

As the alkaline washing liquid, aqueous solutions of one or more anhydrides selected from the group consisting of lithium hydroxide (LiOH), lithium carbonate ($Li_2CO_3$), and ammonium carbonate (($NH_4)_2CO_3$) and a hydrate thereof can be exemplary examples. In addition, as an alkali, ammonia can also be used.

The temperature of the washing liquid that is used for the washing is preferably 15°C or lower, more preferably 10°C or lower, and still more preferably 8°C or lower. When the temperature of the washing liquid is controlled within the above-described range to an extent that the washing liquid does not freeze, it is possible to suppress the excessive elution of lithium ions from the crystal structure of the calcined product into the washing liquid during the washing.

A method for bringing the washing liquid and the calcined product into contact in the washing step, the following methods are exemplary examples.

1) A method in which the calcined product is injected into the washing liquid and stirred.
2) A method in which the washing liquid is sprayed to the calcined product as a shower water.
3) A method in which the calcined product is injected into the washing liquid and stirred, then, the calcined product is separated from the aqueous solution of each washing liquid, and then the washing liquid is sprayed to the calcined product after separation as a shower water.

After washing, it is preferable to carry out a dehydration treatment to obtain a wet cake containing 15 weight% or more of moisture. As an example of the upper limit of the moisture content rate of the wet cake, 30 weight% or less is preferable.

[Thermal treatment step]

In the present embodiment, the obtained wet cake is preferably thermally treated. The thermal treatment makes it possible to control the above-described (1) and (2) and other physical properties within the ranges of the present embodiment.

Regarding the thermal treatment time, the total time taken while the temperature begins to be raised and reaches the heating temperature and the holding of the composite metal hydroxide at the heating temperature ends is preferably set to 1 hour or longer and 10 hours or shorter. The temperature rising rate in the heating step until the highest holding temperature is reached is preferably 100 °C/hour or faster, more preferably 150 °C/hour or faster, and particularly preferably 200 °C/hour or faster.

The thermal treatment temperature is preferably 500°C or higher, more preferably 600°C or higher, and particularly preferably 700°C or higher. In addition, the thermal treatment temperature is preferably 900°C or lower, more preferably 850°C or lower, and particularly preferably 800°C or lower.

In the thermal treatment step, it is preferable that the wet cake is spread all over in a ceramic container, injected into a batch-type heating furnace or a continuous heating furnace in a stationary state, and thermally treated. In addition, a rotary kiln may be used as a heating facility, and the wet cake may be thermally treated in a fluid state in the furnace tube.

As an atmospheric gas to be brought into contact with the wet cake in the thermal treatment step, an oxidizing gas is preferably supplied. As the oxidizing gas, an air or oxygen can be used. In a case where an air is used, carbon dioxide is preferably removed to a concentration to less than 100 pppm.

The wet cake containing 15 weight% or more of moisture is thermally treated, whereby the moisture heated until the moisture is completely dried dissolves some of LiMO. Therefore, the aggregation between the primary particles is likely to get loose, and the abundance of 200 nm or less small pores, which are measured by the gas adsorption method, is likely to become small.

The thermal treatment carried out under the above-described conditions after the washing step makes it possible to control the specific surface area of LiMO and the characteristic values obtained from the adsorption isotherm measurement of nitrogen gas obtained by the gas adsorption method within the ranges of the present embodiment.

• Crushing step

After calcining, the obtained LiMO may be crushed.

The crushing step is preferably carried out using an airflow-type pulverizer, a collision-type pulverizer equipped with a classification mechanism, a pin mill, a ball mill, a jet mill, a counter jet mill equipped with a classification rotor, or the like.

<CAM>

CAM of the present embodiment contains LiMO of the present embodiment. In CAM of the present embodiment, the content proportion of LiMO in the total mass (100 mass%) of CAM is preferably 70 to 99 mass% and more preferably 80 to 98 mass%.

In the present embodiment, the content proportion of LiMO in the total mass of CAM is observed by irradiating CAM with an electron beam at an acceleration voltage of 20 kV using SEM (for example, JSM-5510 manufactured by JEOL Ltd.). The magnification of a SEM photograph is adjusted to a magnification at which 200 to 400 CAM particles, which are the subject, are present in the SEM photograph. As an example, the magnification may be 1000 to 30000 times.

<Lithium secondary battery>

Next, a positive electrode for which CAM in which LiMO of the present embodiment is used is used as a positive electrode active material for a lithium secondary battery, and a lithium secondary battery having this positive electrode will be described while describing the configuration of a lithium secondary battery.

CAM is preferably composed of the LiMO, but may contain other components as long as the effects of the present invention are not impaired.

An example of the lithium secondary battery has a positive electrode, a negative electrode, a separator interposed between the positive electrode and the negative electrode, and an electrolyte solution disposed between the positive electrode and the negative electrode.

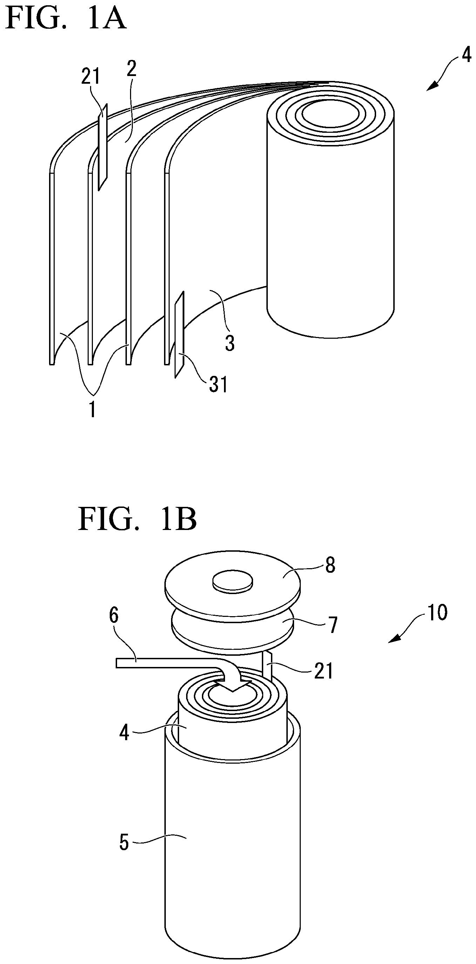

Fig. 1A and Fig. 1B are schematic views illustrating an example of the lithium secondary battery of the present embodiment. A cylindrical lithium secondary battery 10 of the present embodiment is produced as described below.

First, as shown in Fig. 1A, a pair of separators 1 having a strip shape, a stripshaped positive electrode 2 having a positive electrode lead 21 at one end, and a stripshaped negative electrode 3 having an negative electrode lead 31 at one end are laminated in the order of the separator 1, the positive electrode 2, the separator 1, and the negative electrode 3 and are wound to form an electrode group 4.

Next, as shown in Fig. 1B, the electrode group 4 and an insulator, not shown, are accommodated in a battery can 5, and the can bottom is then sealed. The electrode group 4 is impregnated with an electrolyte solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis can be an exemplary example.

In addition, as a shape of the lithium secondary battery having the electrode group 4, a shape specified by IEC60086, which is a standard for a battery specified by the International Electrotechnical Commission (IEC), or by JIS C 8500 can be adopted. For example, shapes such as a cylindrical type and a square type can be exemplary examples.

Furthermore, the lithium secondary battery is not limited to the winding-type configuration and may be a laminate-type configuration in which the laminated structure of the positive electrode, the separator, the negative electrode, and the separator is repeatedly overlaid. As the laminate-type lithium secondary battery, a so-called cointype battery, button-type battery, or paper-type (or sheet-type) battery can be an exemplary example.

Hereinafter, each configuration will be described in order.

(Positive electrode)

The positive electrode can be produced by, first, adjusting a positive electrode mixture containing a positive electrode active material, a conductive material, and a binder and supporting the positive electrode mixture by a positive electrode current collector.

(Conductive material)

As the conductive material in the positive electrode, a carbon material can be used. As the carbon material, graphite powder, carbon black (for example, acetylene black), a fibrous carbon material, and the like can be exemplary examples. Since carbon black is fine particles and has a large surface area, the addition of a small amount of carbon black to the positive electrode mixture makes it possible to enhance the conductive property inside the positive electrode and to improve the charge and discharge efficiency and output characteristics. However, when the amount of carbon black added is too large, both the binding force between the positive electrode mixture and the positive electrode current collector and the binding force inside the positive electrode mixture decrease, which conversely causes an increase in internal resistance.

The proportion of the conductive material in the positive electrode mixture is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease the proportion thereof.

(Binder)

As the binder in the positive electrode, a thermoplastic resin can be used. As the thermoplastic resin, polyimide-based resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the proportion of the fluororesin in the entire positive electrode mixture is set to 1 mass% or more and 10 mass% or less, and the proportion of the polyolefin resin is set to 0.1 mass% or more and 2 mass% or less, whereby it is possible to obtain a positive electrode mixture having both a high adhesive force to the positive electrode current collector and a high bonding force inside the positive electrode mixture.

(Positive electrode current collector)

As the positive electrode current collector in the positive electrode, a stripshaped member formed of a metal material such as Al, Ni, or stainless steel as a forming material can be used. Among these, from the viewpoint of easy processing and low costs, a positive electrode current collector that contains Al as the forming material and is processed into a thin film shape is preferable.

As a method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As a method for applying the paste of the positive electrode mixture to the positive electrode current collector, for example, a slit die coating method, a screen coating method, a curtain coating method, a knife coating method, a gravure coating method, and an electrostatic spraying method are exemplary examples.

The positive electrode can be produced by the method described above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and which can be doped with lithium ions and from which lithium ions can be de-doped at a potential lower than that of the positive electrode are exemplary examples.

As the carbon material that can be used as the negative electrode active material, graphite such as natural graphite and artificial graphite, cokes, carbon black, pyrolytic carbons, a carbon fiber, and a calcined product of an organic polymer compound can be exemplary examples.

As oxides that can be used as the negative electrode active material, oxides of silicon represented by a formula $SiO_x$ (here, x is a positive real number) such as $SiO_2$ and $SiO$; oxides of tin represented by a formula $SnO_x$ (here, x is a positive real number) such as $SnO_2$ and $SnO$; composite metal oxides containing lithium and titanium such as $Li_4Ti_5O_{12}$ can be exemplary examples.

In addition, as the metal that can be used as the negative electrode active material, lithium metal, silicon metal, tin metal, and the like can be exemplary examples.

As a material that can be used as the negative electrode active material, the materials described in WO 2019/098384A1 or US2020/0274158A1 may be used.

These metals and alloys are used mainly singly as an electrode after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fullycharged state during charging, the average discharging potential is low, the capacity retention when the lithium secondary battery is repeatedly charged and discharged is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a stripshaped member formed of a metal material such as Cu, Ni, or stainless steel as the forming material can be an exemplary example. Particularly, a negative electrode current collector that is formed of Cu as a forming material and processed into a thin film shape is preferable since the negative electrode current collector does not easily produce an alloy with lithium and is easy to process.

As a method for supporting the negative electrode mixture by the negative electrode current collector, similar to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolyte solution)

The electrolyte solution in the lithium secondary battery contains an electrolyte and an organic solvent.

As the electrolyte that is contained in the electrolyte solution, lithium salts such as $LiClO_4$, $LiPF_6$, and $LiBF_4$ are exemplary examples, and a mixture of two or more thereof may be used. In addition, the electrolytes described in WO 2019/098384A1 or US2020/0274158A1 may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent that is contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. The electrolyte solution for which such a mixed solvent is used has a number of features as follows: the electrolyte solution has a broad operating temperature range, does not easily deteriorate even when the lithium secondary battery is charged and discharged at a high current rate, does not easily deteriorate even after used for a long period of time, and does not easily dissolve even in a case where a graphite material such as natural graphite or artificial graphite is used as an active material for the negative electrode.

Furthermore, as the electrolyte solution, it is preferable to use an electrolyte solution containing a lithium salt containing fluorine such as $LiPF_6$ and an organic solvent having a fluorine substituent in order to enhance the safety of the obtained lithium secondary battery. A mixed solvent containing an ether having a fluorine substituent such as pentafluoropropyl methyl ether or 2,2,3,3-tetrafluoropropyl difluoromethyl ether and dimethyl carbonate is still more preferable since the capacity retention ratio is high even when the lithium secondary battery is charged and discharged at a high current rate.

Since LiMO of the present embodiment is used in CAM having such a configuration, it is possible to improve the rate characteristics and the cycle characteristics of lithium secondary batteries for which CAM is used.

In addition, since positive electrodes having the above-described configuration have CAM having the above-described configuration, it is possible to improve the rate characteristics and the cycle characteristics of lithium secondary batteries.

Furthermore, the lithium secondary battery having the above-described configuration has the above-described positive electrode and thus becomes a secondary battery having high rate characteristics and high cycle characteristics.

<All-solid-state lithium-ion battery>

LiMO of the present embodiment can also be used as an all-solid-state lithium-ion battery positive electrode active material.

A positive electrode for which LiMO of the present embodiment is used as CAM of an all-solid-state lithium-ion battery, and an all-solid-state lithium-ion battery having this positive electrode will be described while describing the configuration of an all-solid-state lithium-ion battery. The all-solid-state lithium-ion battery of the present embodiment is a secondary battery.

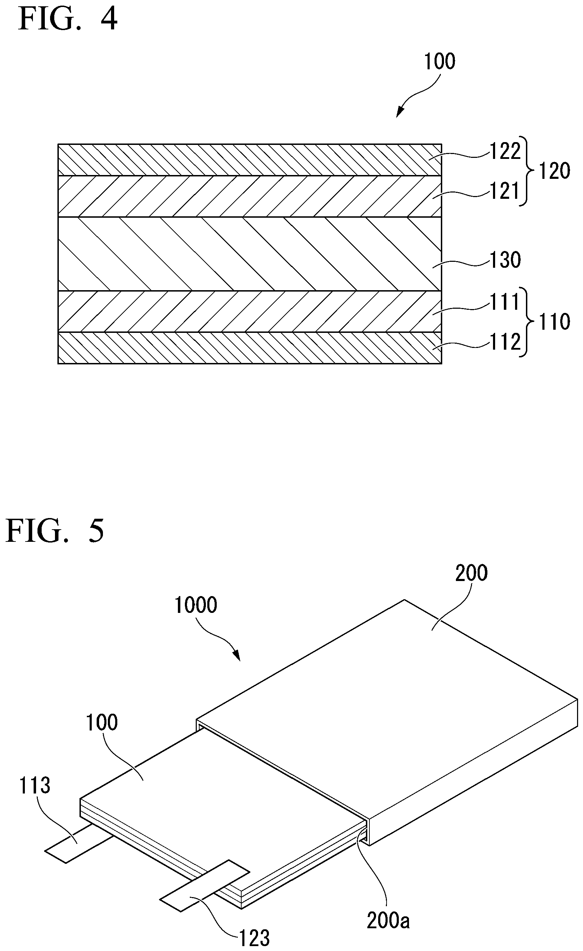

Figs. 4 and 5 are schematic views showing an example of the all-solid-state lithium-ion battery of the present embodiment. Fig. 4 is a schematic view showing a laminate that an all-solid-state lithium-ion battery of the present embodiment includes. Fig. 5 is a schematic view showing an entire configuration of the all-solid-state lithium-ion battery of the present embodiment.

An all-solid-state secondary battery 1000 has a laminate 100 having a positive electrode 110, a negative electrode 120, and a solid electrolyte layer 130 and an exterior body 200 accommodating the laminate 100. In addition, the all-solid-state lithium-ion secondary battery 1000 may have a bipolar structure in which a positive electrode active material and a negative electrode active material are disposed on both sides of a current collector. As specific examples of the bipolar structure, for example, the structures described in JP-A-2004-95400 are exemplary examples. A material that configures each member will be described below.

The laminate 100 may have an external terminal 113 that is connected to a positive electrode current collector 112 and an external terminal 123 that is connected to a negative electrode current collector 122.

In the laminated body 100, the positive electrode 110 and the negative electrode 120 sandwich the solid electrolyte layer 130 so as not to short-circuit each other. In addition, the all-solid-state lithium-ion battery 1000 may have a separator, which has been used in conventional liquid-based lithium ion secondary batteries, between the positive electrode 110 and the negative electrode 120 to prevent a short circuit between the positive electrode 110 and the negative electrode 120.

The all-solid-state lithium-ion battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, a container obtained by processing a laminate film having at least one surface on which a corrosion resistant process has been carried out into a bag shape can also be used.

As the shape of the all-solid-state lithium-ion battery 1000, for example, shapes such as a coin type, a button type, a paper type (or a sheet type), a cylindrical type, and a square type can be exemplary examples.

The all-solid-state lithium-ion battery 1000 is shown in the drawings to have one laminate 100, but is not limited thereto. The all-solid-state lithium-ion battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains the positive electrode active material having the above-described LiMO. In addition, the positive electrode active material layer 111 may contain a solid electrolyte (second solid electrolyte), a conductive material, and a binder.

The positive electrode active material contained in the positive electrode active material layer 111 is in contact with the second solid electrolyte contained in the positive electrode active material layer 111. Specifically, the positive electrode active material layer 111 contains a plurality of particles containing LiMO crystals (positive electrode active material) and a solid electrolyte loaded between the plurality of particles (positive electrode active material) and in contact with the particles (positive electrode active material).

(Solid electrolyte)

As the solid electrolyte that the positive electrode active material layer 111 may have, a solid electrolyte that is lithium ion-conductive and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples.

As the organic electrolyte, polymer-based solid electrolytes are exemplary examples. As each electrolyte, the compounds described in WO 2020/208872A1, US2016/0233510A1, US2012/0251871A1, and US2018/0159169A1 are exemplary examples, and examples thereof include the following compounds.

In the present embodiment, an oxide-based solid electrolyte or a sulfide-based solid electrolyte is preferably used, and an oxide-based solid electrolyte is more preferably used.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 2020/208872A1, US2016/0233510A1, and US2020/0259213A1.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material. As the amorphous (amorphous) solid electrolyte, for example, Li-B-O compounds such as $Li_3BO_3$, $Li_2B_4O_7$, and $LiBO_2$ are exemplary examples. The oxide-based solid electrolyte preferably contains an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$, $LiI$-$Li_3PO_4$-$P_2S_5$-based compounds, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S$-$P_2S_5$-based compounds include solid electrolytes containing $Li_2S$ and $P_2S_5$ and further containing a different raw material. In addition, the $Li_2S$-$P_2S_5$-based compounds also include solid electrolytes containing $Li_2S$ and $P_2S_5$ in different mixing ratios.

As the $Li_2S$-$P_2S_5$-based compounds, $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-LiI-LiBr, and the like can be exemplary examples.

As the $Li_2S$-$SiS_2$-based compounds, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$P_2S_5$-LiCl, and the like are exemplary examples.

As the $Li_2S$-$GeS_2$-based compounds, include $Li_2S$-$GeS_2$, $Li_2S$-$GeS_2$-$P_2S_5$, and the like are exemplary examples.

The sulfide-based solid electrolyte may be a crystalline material or an amorphous (amorphous) material. The sulfide-based solid electrolyte preferably contains an amorphous material.

Two or more solid electrolytes can be jointly used as long as the effect of the invention is not impaired.

(Conductive material and binder)

As the conductive material that the positive electrode active material layer 111 may have, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface side of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface side of the positive electrode current collector 112, and sintering the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method described above.

(Negative electrode)

The negative electrode e 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

(Solid electrolyte layer)

The solid electrolyte layer 130 has the above-described solid electrolyte (first solid electrolyte). In a case where the positive electrode active material layer 111 contains a solid electrolyte, the solid electrolyte configuring the solid electrolyte layer 130 (first solid electrolyte) and the solid electrolyte contained in the positive electrode active material layer 111 (second solid electrolyte) may be the same substances. The solid electrolyte layer 130 functions as a medium that transmits lithium ions, and also functions as a separator that separates the positive electrode 110 and the negative electrode 120 to prevent a short circuit.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

Furthermore, the solid electrolyte layer 130 can be formed by forming the solid electrolyte in a pellet form in advance, overlaying the pellets of the solid electrolyte and the above-described positive electrode active material sheet, and uniaxially pressing the pellets and the positive electrode active material sheet in the laminating direction. The positive electrode active material sheet becomes the positive electrode active material layer 111.

With respect to the obtained laminate of the positive electrode active material layer 111 and the solid electrolyte layer 130, the positive electrode current collector 112 is further disposed on the positive electrode active material layer 111. The positive electrode current collector 112 is uniaxially pressed in the laminating direction and further sintered, whereby the solid electrolyte layer 130 and the positive electrode 110 can be formed.

Such a positive electrode 110 is in contact with the solid electrolyte layer 130. The solid electrolyte layer 130 has the first solid electrolyte.

The positive electrode 110 has the positive electrode active material layer 111 in contact with the solid electrolyte layer 130 and the positive electrode current collector 112 on which the positive electrode active material layer 111 is laminated. The positive electrode active material layer 111 contains a plurality of particles containing LiMO crystals (that is, CAM that is an aspect of the present invention) and the solid electrolyte loaded between the plurality of particles and in contact with the particles (the second solid electrolyte).

The solid electrolyte and the particles contained in the positive electrode active material layer 111 are each in contact with the solid electrolyte layer 130. That is, the particles contained in the positive electrode active material layer 111 are in contact with the solid electrolyte contained in the positive electrode active material layer 111 and the solid electrolyte layer 130.

It is not necessary for all of the particles (positive electrode active material) contained in the positive electrode active material layer 111 to be in contact with the solid electrolyte contained in the positive electrode active material layer 111 and the solid electrolyte layer 130.

The positive electrode active material contained in the positive electrode active material layer 111 is in contact with the solid electrolyte contained in the positive electrode active material layer 111 and thereby becomes electrically connected with the solid electrolyte contained in the positive electrode active material layer 111. In addition, the positive electrode active material contained in the positive electrode active material layer 111 is in contact with the solid electrolyte layer 130 and thereby becomes electrically connected with the solid electrolyte layer 130. Furthermore, the solid electrolyte contained in the positive electrode active material layer 111 is in contact with the solid electrolyte layer 130 and thereby becomes electrically connected with the solid electrolyte layer 130.

Due to the above-described facts, the positive electrode active material contained in the positive electrode active material layer 111 becomes directly or indirectly electrically connected with the solid electrolyte layer 130.

The laminate 100 can be produced by laminating the negative electrode 120 on the solid electrolyte layer 130 provided on the positive electrode 110 as described above using a well-known method in an aspect that the negative electrode electrolyte layer 121 comes into contact with the surface of the solid electrolyte layer 130. Therefore, the solid electrolyte layer 130 comes into contact with and becomes electrically connected with the negative electrode active material layer 121.

As described above, in the obtained all-solid-state lithium-ion battery 100, the solid electrolyte layer 130 is provided in contact with the positive electrode 110 and the negative electrode 120 such that the positive electrode 110 and the negative electrode 120 do not short-circuit. The provided all-solid-state lithium-ion battery 100 is connected to an external power source and charged by applying a negative potential to the positive electrode 110 and applying a positive potential to the negative electrode 120.

Furthermore, the charged all-solid-state lithium-ion battery 100 is discharged by connecting a discharge circuit to the positive electrode 110 and the negative electrode 120 and energizing the discharge circuit.

According to the positive electrode active material for an all-solid-state lithium-ion battery having the above-described configuration, it is possible to smoothly exchange lithium ions between the positive electrode and the solid electrolyte and to improve the battery performance.

According to the electrode having the above-described configuration, since the all-solid-state lithium-ion battery has the positive electrode active material for an all-solid-state lithium-ion battery, it is possible to improve the battery performance of the all-solid-state lithium-ion battery.

According to the all-solid-state lithium-ion battery having the above-described configuration, the all-solid-state lithium-ion battery has the positive electrode active material containing the above-described lithium metal composite oxide and thus exhibits excellent battery performance.

Hitherto, the preferable embodiment examples according to the present invention have been described with reference to the accompanying drawings, but the present invention is not limited to such examples. The variety of shapes, combinations, and the like of the individual constituent members described in the above-described examples are examples, and a variety of modifications are permitted based on design requirements and the like without departing from the gist of the present invention.

[Examples]

Next, the present invention will be described in more detail using examples.

<Composition analysis>

The composition analysis of LiMO to be produced by a method described below was carried out by the method described in the above-described [composition analysis].

<Measurement of (1)>

V, which is the total pore volume of LiMO to be produced by the method described below, was measured by the method described in the above-described [measurement of V].

<Measurement of (2)>

S, which is the specific surface area of LiMO to be produced by the method described below, was measured by the method described in the above-described [measurement of S].

<Formula (A)>

The value of the following formula (A) was obtained using the obtained values of V and S.

$$S/(V \times 1000) \cdots \text{Formula (A)}$$

<Measurement of area of hysteresis portion between adsorption isotherm and desorption isotherm>

The area of a hysteresis portion between an adsorption isotherm and a desorption isotherm was measured by the method described in the above-described [measurement of S1].

<Measurement of peak maximum value of log differential pore volume>

The peak maximum value of the log differential pore volume was obtained by the method described in the above-described [measurement of peak maximum value of log differential pore volume].

<Measurement of average particle diameter>

The 50% cumulative volume particle diameter $D_{50}$ ($\mu$m) was measured by the method described in the above-described [measurement of average particle diameter $D_{50}$].

<Measurement of tapped density>

As a tapped density, a value obtained by the method described in the above-described [measurement method of tapped density] was used.

<Production of positive electrode for lithium secondary battery>

A paste-like positive electrode mixture was prepared by adding and kneading LiMO, a conductive material (acetylene black), and a binder (PVdF) in proportions in which a composition of LiMO:conductive material:binder = 92:5:3 (mass ratio) was achieved. During the preparation of the positive electrode mixture, N-methyl-2-pyrrolidone was used as an organic solvent.
The obtained positive electrode mixture is applied to a 40 $\mu$m-thick Al foil, which is to serve as a current collector, dried at 60°C for one hour, and dried in a vacuum at 150°C for eight hours, thereby obtaining a positive electrode for a lithium secondary battery. The electrode area of the positive electrode for a lithium secondary battery was set to 34.96 cm$^2$.

<Production of lithium secondary battery (coin-type half cell)>

The following operation was carried out in a glove box under an argon atmosphere.
The positive electrode for a lithium secondary battery produced in the section <Production of positive electrode for lithium secondary battery> was placed on the lower lid of a part for a coin type battery R2032 (manufactured by Hohsen Corp.) with the aluminum foil surface facing downward, and a separator (polyethylene porous film) was placed on the positive electrode. An electrolyte solution (300 $\mu$l) was poured thereinto. As the electrolyte solution, an electrolyte solution obtained by dissolving LiPF$_6$ in a liquid mixture of ethylene carbonate, dimethyl carbonate, and ethyl methyl carbonate in a volume ratio of 30:35:35 in a proportion of 1.0 mol/l.
Next, lithium metal was used as a negative electrode, and the negative electrode was placed on the upper side of the laminate film separator. An upper lid was placed through a gasket and caulked using a caulking machine, thereby producing a lithium secondary battery (coin-type half cell R2032; hereinafter, referred to as "half cell" in some cases).

[Charge and discharge test]

After initial charging and discharging using the half cell produced by the above-described method, a discharge rate test and a cycle test were carried out, and the discharge rate characteristics and the cycle characteristics were evaluated.
As the initial charging and discharging, constant current constant voltage charging and constant current discharge were carried out at a testing temperature of 25°C at a current of 0.2 CA for both the charging and the discharging. In the case of 1 - y - z - w $\geq$ 0.8 in the composition formula (I), the maximum charging voltage was set to 4.35 V and the minimum discharging voltage was set to 2.8 V. In the case of 1 - y - z - w < 0.8 in the composition formula (I), the maximum charging voltage was set to 4.3 V and the minimum discharging voltage was set to 2.5 V.

·· Discharge rate test

(In case of 1 - y - z - w $\geq$ 0.8 in composition formula (I))

Test temperature: 25°C
Maximum charging voltage: 4.35 V, charging current: 1 CA, constant current constant voltage charging
Minimum discharging voltage: 2.8 V, discharging current: 1 CA or 5 CA, constant current discharging

(In case of 1 - y - z - w < 0.8 in composition formula (I))

Test temperature: 25°C
Maximum charging voltage: 4.3 V, charging current: 1 CA, constant current constant voltage charging
Minimum discharging voltage: 2.5 V, discharging current: 1 CA or 5 CA, constant current discharging

A 5CA/1CA discharge capacity retention that was obtained using a discharge capacity when the battery is discharged at a constant current of 1CA and a discharge capacity when the battery is discharged at a constant current of 5CA from the following formula was obtained and used as an index for the discharge rate characteristics. As the 5CA/1CA discharge capacity retention becomes higher, the discharge rate characteristics become higher, and lithium secondary batteries exhibit a higher output.
·· 5CA/1CA discharge capacity retention

$$5CA/1CA \text{ discharge capacity retention (\%)}$$

$$= \text{discharge capacity at } 5CA/\text{discharge capacity at } 1CA \times 100$$

After the discharge rate test, a cycle test is carried out. A charge and discharge cycle is repeated 50 times under the conditions described below.

·· Cycle test

(In case of 1 - y - z - w $\geq$ 0.8 in composition formula (I))

Test temperature: 25°C
Maximum charging voltage: 4.35 V, charging current: 0.5 CA, constant current constant voltage charging
Minimum discharging voltage: 2.8 V, discharging current: 1 CA, constant current discharging

(In case of 1 - y - z - w < 0.8 in composition formula (I))

Test temperature: 25°C
Maximum charging voltage: 4.3 V, charging current: 1 CA, constant current constant voltage charging
Minimum discharging voltage: 2.5 V, discharging current: 1 CA, constant current discharging

The discharge capacity in the first cycle was regarded as the cycle initial capacity, a value obtained by dividing the discharge capacity in the 50th cycle by the cycle initial capacity was calculated, and this value was regarded as the cycle retention rate.

A lithium secondary battery was manufactured by the methods described in

<Manufacturing a positive electrode for a lithium secondary battery> and
<Manufacturing a lithium secondary battery (coin-type half cell)>.

• Charge and discharge test

The cycle retention rate was measured by the method described in the above-described [charge and discharge test] using the produced half cell.

<<Example 1>>

• Production of LiMO 1

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 50°C.

A nickel sulfate aqueous solution, a cobalt sulfate aqueous solution, and a manganese sulfate aqueous solution were mixed in proportions in which the ratio of nickel atoms, cobalt atoms, and manganese atoms became 0.60:0.20:0.20, and furthermore, zirconium sulfate was added in a proportion in which the atom ratio Zr/(Ni + Co + Mn) became 0.005, thereby obtaining a raw material liquid mixture 1.

Next, the raw material liquid mixture 1 and an ammonium sulfate aqueous solution, as a complexing agent, were continuously added into the reaction vessel under stirring.

A sodium hydroxide aqueous solution was timely added dropwise such that the pH of the solution in the reaction vessel reached 11.9 (value measured at a liquid temperature of the aqueous solution of 40°C), and a nickel-containing metal composite hydroxide was obtained.

The obtained nickel-containing metal composite hydroxide was washed and then dehydrated with a centrifuge.

Furthermore, the nickel-containing metal composite hydroxide was washed, dehydrated, isolated and dried at 105°C, thereby obtaining a nickel-containing metal composite hydroxide 1.

After that, the nickel-containing metal composite hydroxide 1, a lithium hydroxide monohydrate powder, and a potassium sulfate powder were mixed.

At this time, the nickel-containing metal composite hydroxide 1, the lithium hydroxide monohydrate powder, and the potassium sulfate powder was weighed and mixed at proportions in which Li/(Ni + Co + Mn) reached 1.07 (mol/mol) and $K_2SO_4/(LiOH + K_2SO_4)$ reached 0.1 (mol/mol) in terms of the mixing ratio between elements K and Li.

The mixture was calcined at 650°C for 5 hours in an oxygen atmosphere, thereby obtaining a calcined product.

Then, the calcined product was crushed.

After crushing, the calcined product was calcined at 940°C for 5 hours in an oxygen atmosphere, thereby obtaining a calcined product. The obtained calcined product was crushed to obtain a powder.

The obtained powder and pure water having a liquid temperature adjusted to 5°C were mixed such that the proportion of the powder weight in the total amount reached 0.3 to produce a slurry.

The produced slurry was stirred for 20 minutes and then dehydrated.

Furthermore, the slurry was washed with a shower water that weighed double the above-described powder using pure water adjusted to a liquid temperature of 5°C and then dehydrated, thereby obtaining a wet cake 1 having a water content rate per weight of 17.0%.

The wet cake 1 was spread all over in a saggar, and the saggar was injected into a roller hearth kiln having a maximum temperature set to 760°C in a stationary state, and a thermal treatment was carried out at 760°C for 5 hours.

After the thermal treatment, the wet cake 1 was injected into a pin mill operated at a rotation speed of 16000 rpm and crushed, thereby obtaining LiMO 1.

LiMO1 had a layered structure. As a result of the composition analysis of LiMO 1, x = 0.02, y = 0.20, z = 0.20, w = 0.004 in the composition formula (I).

<<Comparative Example 1>>

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 60°C.

A nickel sulfate aqueous solution, a cobalt sulfate aqueous solution, and a manganese sulfate aqueous solution were mixed in proportions in which the ratio of nickel atoms, cobalt atoms, and manganese atoms reached 0.60:0.20:0.20, thereby obtaining a raw material liquid mixture 2.

Next, the raw material liquid mixture 2 and an ammonium sulfate aqueous solution, as a complexing agent, were continuously added into the reaction vessel under stirring. A sodium hydroxide aqueous solution was timely added dropwise such that the pH of the solution in the reaction vessel reached 12.0 (value measured at a liquid temperature of the aqueous solution of 40°C), and a nickel-containing metal composite hydroxide was obtained.

The obtained nickel-containing metal composite hydroxide was washed and then dehydrated with a centrifuge.

Furthermore, the nickel-containing metal composite hydroxide was washed, dehydrated, isolated and dried at 105°C, thereby obtaining a nickel-containing metal composite hydroxide 2.

After that, the nickel-containing metal composite hydroxide 2, a lithium carbonate powder, and a potassium sulfate powder were mixed.

At this time, the nickel-containing metal composite hydroxide 2, the lithium hydroxide monohydrate powder, and the potassium sulfate powder was weighed and mixed at proportions in which Li/(Ni + Co + Mn) reached 1.26 (mol/mol) and $K_2SO_4/(2 \times Li_2CO_3 + K_2SO_4)$ reached 0.1 (mol/mol) in terms of the mixing ratio between elements K and Li.

The obtained mixture was calcined at 925°C for 5 hours in an oxygen atmosphere, thereby obtaining a calcined product.

After that, the obtained calcined product was crushed to obtain a powder.

The obtained powder and pure water having a liquid temperature adjusted to 5°C were mixed such that the proportion of the powder weight in the total amount reached 0.3 to produce a slurry.

The produced slurry was stirred for 20 minutes and then dehydrated.

Furthermore, the slurry was washed with a shower water that weighed double the above-described powder using pure water adjusted to a liquid temperature of 5°C and then dehydrated, thereby obtaining a wet cake 2 having a water content rate per weight of 18.3%.

The wet cake 2 was spread all over in a saggar, injected into a vacuum dryer in a stationary state, and dried at a set temperature of 150°C for 8 hours, thereby obtaining LiMO 2.

As a result of the composition analysis of LiMO 2, x = 0.00, y = 0.20, z = 0.20, w = 0 in the composition formula (I).

<<Example 2>>

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 70°C.

A nickel sulfate aqueous solution, a cobalt sulfate aqueous solution, and a manganese sulfate aqueous solution were mixed in proportions in which the ratio of nickel atoms, cobalt atoms, and manganese atoms reached 0.91:0.05:0.04, thereby obtaining a raw material liquid mixture 3.

Next, this raw material liquid mixture 3 was continuously added into the reaction vessel under stirring. A sodium hydroxide aqueous solution was timely added dropwise such that the pH of the solution in the reaction vessel reached 10.6 (value measured at a liquid temperature of the aqueous solution of 40°C), and a nickel-containing metal composite hydroxide was obtained.

The obtained nickel-containing metal composite hydroxide was washed and then dehydrated with a centrifuge.

After that, the nickel-containing metal composite hydroxide was washed, dehydrated, isolated and dried at 105°C, thereby obtaining a nickel-containing metal composite hydroxide 3.

After that, the nickel-containing metal composite hydroxide 3, a lithium hydroxide monohydrate powder, and a potassium sulfate powder were mixed.

At this time, the nickel-containing metal composite hydroxide 3, the lithium hydroxide monohydrate powder, and the potassium sulfate powder was weighed and mixed at proportions in which Li/(Ni + Co + Mn) reached 1.10 (mol/mol) and $K_2SO_4$/(LiOH + $K_2SO_4$) reached 0.1 (mol/mol) in terms of the mixing ratio between elements K and Li.

The mixture was calcined at 650°C for 5 hours in an oxygen atmosphere, thereby obtaining a calcined product.

After that, the obtained calcined product was crushed.

After crushing, the calcined product was further calcined at 820°C for 5 hours in an oxygen atmosphere, thereby obtaining a calcined product. The obtained calcined product was crushed to obtain a powder.

The obtained powder and pure water having a liquid temperature adjusted to 5°C were mixed such that the proportion of the powder weight in the total amount reached 0.3 to produce a slurry.

The produced slurry was stirred for 20 minutes and then dehydrated. Furthermore, the slurry was washed with a shower water that weighed double the above-described powder using pure water adjusted to a liquid temperature of 5°C and then dehydrated, thereby obtaining a wet cake 3 having a water content rate per weight of 21.5%.

The wet cake 3 was spread all over in a saggar, and the saggar was injected into a roller hearth kiln having a maximum temperature set to 760°C in a stationary state, and a thermal treatment was carried out at 760°C for 5 hours. After the thermal treatment, the wet cake 3 was injected into a pin mill operated at a rotation speed of 16000 rpm and crushed, thereby obtaining LiMO 3.

LiMO 3 had a layered structure. As a result of the composition analysis of LiMO 3, x = 0.01, y = 0.05, z = 0.04, w = 0 in the composition formula (I).

<<Comparative Example 2>>

The nickel-containing metal composite hydroxide 3 obtained in the process of Example 2, a lithium hydroxide monohydrate powder, and a potassium sulfate powder were mixed.

At this time, the nickel-containing metal composite hydroxide 3, the lithium hydroxide monohydrate powder, and the potassium sulfate powder was weighed and mixed at proportions in which Li/(Ni + Co + Mn) reached 1.10 (mol/mol) and $K_2SO_4$/(LiOH + $K_2SO_4$) reached 0.1 (mol/mol) in terms of the mixing ratio between elements K and Li.

The mixture was calcined at 790°C for 5 hours in an oxygen atmosphere, thereby obtaining a calcined product. The obtained calcined product was crushed to obtain a powder.

The obtained powder and pure water having a liquid temperature adjusted to 5°C were mixed in a proportion in which the proportion of the powder weight in the total amount reached 0.3 to produce a slurry.

The produced slurry was stirred for 20 minutes and then dehydrated. Furthermore, the slurry was washed with a shower water that weighed double the above-described powder using pure water adjusted to a liquid temperature of 5°C and then dehydrated, thereby obtaining a wet cake 4 having a water content rate per weight of 25.4%.

The wet cake 4 was spread all over in a saggar, injected into a vacuum dryer in a stationary state, and dried at a set temperature of 150°C for 8 hours, thereby obtaining LiMO 4.

As a result of the composition analysis of LiMO 4, x = 0.02, y = 0.05, z = 0.04, w = 0 in the composition formula (I).

<<Example 3>>

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 60°C.

Next, the raw material liquid mixture 3 obtained in the process of Example 2 and an ammonium sulfate aqueous solution, as a complexing agent, were continuously added into the reaction vessel under stirring. A sodium hydroxide aqueous solution was timely added dropwise such that the pH of the solution in the reaction vessel reached 11.9 (value measured at a liquid temperature of the aqueous solution of 40°C), and a nickel-containing metal composite hydroxide was obtained.

The obtained nickel-containing metal composite hydroxide was washed and then dehydrated with a centrifuge.

After that, the nickel-containing metal composite hydroxide was washed, dehydrated, isolated and dried at 105°C, thereby obtaining a nickel-containing metal composite hydroxide 4.

The nickel-containing metal composite hydroxide 4, a lithium hydroxide monohydrate powder, and a potassium sulfate powder were mixed.

At this time, the nickel-containing metal composite hydroxide 4, the lithium hydroxide monohydrate powder, and the potassium sulfate powder was weighed and mixed at proportions in which Li/(Ni + Co + Mn) reached 1.10 (mol/mol) and $K_2SO_4$/(LiOH + $K_2SO_4$) reached 0.1 (mol/mol) in terms of the mixing ratio between elements K and Li.

The mixture was calcined at 650°C for 5 hours in an oxygen atmosphere, thereby obtaining a calcined product.

After that, the obtained calcined product was crushed.

After crushing, the calcined product was further calcined at 820°C for 5 hours in an oxygen atmosphere, thereby obtaining a calcined product. The obtained calcined product was crushed to obtain a powder.

The obtained powder and pure water having a liquid temperature adjusted to 5°C were mixed such that the proportion of the powder weight in the total amount reached 0.3 to produce a slurry.

The produced slurry was stirred for 20 minutes and then dehydrated. Furthermore, the slurry was washed with a shower water that weighed double the above-described powder using pure water adjusted to a liquid temperature of 5°C and then dehydrated, thereby obtaining a wet cake 5 having a water content rate per weight of 21.3%.

The wet cake 5 was spread all over in a saggar, and the saggar was injected into a roller hearth kiln having a maximum temperature set to 760°C in a stationary state, and a thermal treatment was carried out at 760°C for 5 hours. After the thermal treatment, the wet cake 5 was injected into a pin mill operated at a rotation speed of 16000 rpm and crushed, thereby obtaining LiMO 5.

LiMO 5 had a layered structure. As a result of the composition analysis of LiMO 5, x = 0.01, y = 0.05, z = 0.04, w = 0 in the composition formula (I).

<<Comparative Example 3>>

After water was poured into a reaction vessel including a stirrer and an overflow pipe, a sodium hydroxide aqueous solution was added thereto, and nitrogen gas was introduced into the reaction vessel. The liquid temperature in the reaction vessel was held at 55°C.

A nickel sulfate aqueous solution and a cobalt sulfate aqueous solution were mixed in proportions in which the ratio of nickel atoms, cobalt atoms, and manganese atoms reached 0.89:0.11, thereby obtaining a raw material liquid mixture 4.

Next, the raw material liquid mixture 4 and an ammonium sulfate aqueous solution, as a complexing agent, were continuously added into the reaction vessel under stirring. A sodium hydroxide aqueous solution was timely added dropwise such that the pH of the solution in the reaction vessel reached 11.8 (value measured at a liquid temperature of the aqueous solution of 40°C), and a nickel-containing metal composite hydroxide was obtained.

The obtained nickel-containing metal composite hydroxide was washed and then dehydrated with a centrifuge.

After that, the nickel-containing metal composite hydroxide was washed, dehydrated, isolated and dried at 105°C, thereby obtaining a nickel-containing metal composite hydroxide 5.

The nickel-containing metal composite hydroxide 5 and a lithium hydroxide monohydrate powder were mixed.

At this time, the nickel-containing metal composite hydroxide 5 and the lithium hydroxide monohydrate powder were weighed and mixed in proportions in which Li/(Ni + Co) reached 1.10 (mol/mol).

The mixture was calcined at 720°C for 5 hours in an oxygen atmosphere, thereby obtaining a calcined product. After that, the obtained calcined product was crushed to obtain a powder.

The obtained powder and pure water having a liquid temperature adjusted to 5°C were mixed such that the proportion of the powder weight in the total amount reached 0.3 to produce a slurry.

The produced slurry was stirred for 20 minutes and then dehydrated, thereby obtaining a wet cake 5 having a water content rate per weight of 11.0%.

The wet cake 5 was spread all over in a saggar, injected into a vacuum dryer in a stationary state, and dried at a set temperature of 150°C for 8 hours. The water content rate per weight after drying was less than 0.1%.

An alumina powder was added to the powder after drying in a proportion in which Al/(Ni + Co) reached 0.01. The powder after mixing was spread all over in a saggar and thermally treated at 720°C for 5 hours in an oxygen atmosphere. After the thermal treatment, the powder was crushed to obtain LiMO 6.

As a result of the composition analysis of LiMO 6, x = -0.01, y = 0.11, z = 0.00, w = 0.01 in the composition formula (I).

Table 1 below shows the composition ratios, the kinds and contents of the added elements, and the results of the total pore volumes, the BET specific surface areas, S/(V × 1000), the average particle diameters, the tapped densities, the areas of the hysteresis portions between the adsorption isotherm and the desorption isotherm, the peak maximum values of the log differential pore volumes, the discharge capacity retentions, and the cycle retention rates in Examples 1 to 3 and Comparative Examples 1 to 3.

[Table 1]

| | Example 1 | Comparative Example 1 | Example 2 | Example 3 | Comparative Example 2 | Comparative Example 3 |
|---|---|---|---|---|---|---|
| Ni/Co/Mn composition [mol% ratio] | 60/20/20 | 60/20/20 | 91/5/4 | 91/5/4 | 91/5/4 | 89/11/0 |

(continued)

|  | Example 1 | Comparative Example 1 | Example 2 | Example 3 | Comparative Example 2 | Comparative Example 3 |
|---|---|---|---|---|---|---|
| Kind and content of added element [mol%] | Zr/(Ni + Co + Mn) = 0.005 | - | - | - | - | Al/(Ni + Co) = 0.01 |
| Total pore volume V [cm³/g] | 0.0020 | 0.011 | 0.0034 | 0.0030 | 0.012 | 0.0022 |
| BET specific surface area S [m²/g] | 0.60 | 1.89 | 0.89 | 0.82 | 1.98 | 0.34 |
| S/(V x 1000) [m²/cm³] | 0.30 | 0.17 | 0.26 | 0.27 | 0.17 | 0.16 |
| Average particle size $D_{50}$ [μm] | 4.1 | 9.6 | 3.6 | 3.6 | 3.4 | 13.8 |
| Tapped density [g/cm³] | 1.7 | 1.8 | 1.7 | 1.8 | 1.4 | 2.6 |
| Area of hysteresis portion between adsorption isotherm and desorption isotherm S1 [cm³/g] | Less than 0.001 | 0.003 | 0.001 | Less than 0.001 | 0.006 | 0.067 |
| peak maximum value of log differential pore volume [cm³/(g·nm] | 0.003 | 0.024 | 0.006 | 0.006 | 0.024 | 0.005 |
| 5C/1C discharge capacity retention [%] | 92.0 | 89.5 | 92.3 | 93.0 | 84.5 | 40.5 |
| Cycle retention rate [%] | 92.0 | 69.9 | 90.2 | 91.1 | 78.3 | 80.4 |

As shown in Table 1, in Examples 1 to 3 where (1) and (2) were satisfied, the cycle retention rates were high and, furthermore, the discharge capacity retentions were also high compared with those in Comparative Examples 1 to 3.
This is considered to be because, in Examples 1 to 3 where the wet cake underwent the thermal treatment and then crushing step, the numbers of small pores formed by the aggregation of the LiMO particles were smaller than those in Comparative Examples 1 to 3 where the wet cake underwent the drying step.

«Hysteresis of adsorption isotherm and desorption isotherm»

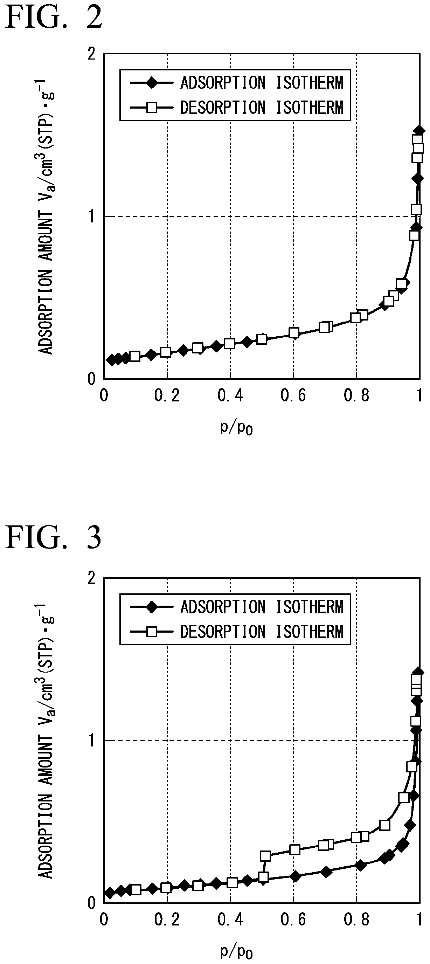

Fig. 2 shows the adsorption isotherm and desorption isotherm of nitrogen gas of LiMO in Example 1. As shown in Fig. 2, in Example 1, the adsorption isotherm and the desorption isotherm almost coincided with each other, and no hysteresis was observed. Therefore, it was possible to confirm that, in LiMO of Example 1, the number of 200 nm or less small pores was small and the abundance of bottleneck-type pores was small.
Fig. 3 shows the adsorption isotherm and desorption isotherm of nitrogen gas of LiMO of Comparative Example 3. As shown in Fig. 3, in Comparative Example 3, the hysteresis seen between the adsorption isotherm and the desorption isotherm was large. Therefore, it was possible to confirm that, in LiMO of Comparative Example 3, the number of 200 nm or less small pores was large and the abundance of bottleneck-type pores was large.

[Reference Signs List]

1: Separator
2: positive electrode
3: negative electrode
4: Electrode group
5: Battery can
6: Electrolyte solution
7: Top insulator

8: Sealing body
10: Lithium secondary battery
21: positive electrode lead
31: negative electrode lead
100: Laminate
110: positive electrode
111: positive electrode active material layer
112: positive electrode current collector
113: External terminal
120: negative electrode
121: negative electrode electrolyte layer
122: negative electrode current collector
123: External terminal
130: Solid electrolyte layer
200: Exterior body
200a: Opening portion
1000: All-solid-state lithium-ion battery

**Claims**

1. A lithium metal composite oxide having a layered structure, comprising at least:

   Li;
   Ni; and
   an element X,
   wherein the element X is one or more elements selected from the group consisting of Co, Mn, Fe, Cu, Ti, Mg, Al, B, W, Mo, Nb, Zn, Sn, Zr, Ga, La, and V, and
   characteristic values obtained from adsorption isotherm measurement of nitrogen gas obtained by a gas adsorption method satisfy (1) and (2),

   (1): a total pore volume V obtained from an amount of nitrogen adsorbed when a relative pressure (p/p0) is 0.99 on an adsorption isotherm of the nitrogen gas satisfies 0.005 $cm^3/g$ or less, and
   (2): a value of formula (A) satisfies 0.18 or more,

   $$S/(V \times 1000) \cdots \text{Formula (A)}$$

   (in the formula (A), S is a specific surface area (unit: $m^2/g$) of the lithium metal composite oxide obtained from a BET method, and V is a total pore volume (unit: $cm^3/g$) of the lithium metal composite oxide obtained from an amount of nitrogen adsorbed at a relative pressure of 0.99 on the adsorption isotherm).

2. The lithium metal composite oxide according to Claim 1,
   wherein formula (I) is satisfied,

   $$Li[Li_x(Ni_{(1-y-z-w)}Co_yMn_zM_w)_{1-x}]O_2 \cdots \qquad (I)$$

   (here, $-0.1 \leq x \leq 0.2$, $0 \leq y \leq 0.4$, $0 \leq z \leq 0.4$, $0 \leq w \leq 0.1$, $y + z + w < 1$, and M represents one or more elements selected from the group consisting of Fe, Cu, Ti, Mg, Al, W, B, Mo, Nb, Zn, Sn, Zr, Ga, La, and V).

3. The lithium metal composite oxide according to Claim 1 or 2,
   wherein an average particle diameter $D_{50}$, which is a 50% cumulative diameter obtained from particle size distribution measurement, satisfies 1 $\mu$m or more and 10 $\mu$m or less.

4. The lithium metal composite oxide according to any one of Claims 1 to 3,
   wherein, in the adsorption isotherm measurement of the nitrogen gas and the desorption isotherm measured subsequent to an adsorption isotherm, an area of a region formed between the adsorption isotherm and the desorption isotherm in a range where p/p0, which is the relative pressure, is 0.5 or more and 0.9 or less satisfies 0.02 $cm^3/g$ or less.

**5.** The lithium metal composite oxide according to any one of Claims 1 to 4,

wherein, in pore distribution obtained from the adsorption isotherm measurement of the nitrogen gas, a log differential pore volume has a maximum value in a region of pore sizes of 200 nm or less, and
the maximum value satisfies 0.03 $cm^3/(g \cdot nm)$ or less.

**6.** The lithium metal composite oxide according to any one of Claims 1 to 5,
wherein the S satisfies 0.1 $m^2/g$ or more and 1.5 $m^2/g$ or less.

**7.** The lithium metal composite oxide according to any one of Claims 1 to 6,
wherein a tapped density satisfies 1.2 $g/cm^3$ or more and 2.5 $g/cm^3$ or less.

**8.** A positive electrode active material for a lithium secondary battery, comprising:
the lithium metal composite oxide according to any one of Claims 1 to 7.

**9.** A positive electrode for a lithium secondary battery, comprising:
the positive electrode active material for a lithium secondary battery according to Claim 8.

**10.** A lithium secondary battery comprising:
the positive electrode for a lithium secondary battery according to Claim 9.

# FIG. 1A

# FIG. 1B

## FIG. 2

## FIG. 3

# FIG. 4

# FIG. 5

## INTERNATIONAL SEARCH REPORT

| | International application No. |
|---|---|
| | PCT/JP2021/007311 |

A. CLASSIFICATION OF SUBJECT MATTER
Int.Cl. C01G53/00(2006.01)i, H01M4/505(2010.01)i, H01M4/525(2010.01)i
FI: H01M4/525, H01M4/505, C01G53/00A

According to International Patent Classification (IPC) or to both national classification and IPC

B. FIELDS SEARCHED

Minimum documentation searched (classification system followed by classification symbols)
Int.Cl. C01G53/00, H01M4/505, H01M4/525

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| X | WO 2002/086993 A1 (GS YUASA CORPORATION) 31 October 2002 (2002-10-31), claims, tables 1-13 | 1-10 |
| A | JP 2017-084628 A (SUMITOMO METAL MINING CO., LTD.) 18 May 2017 (2017-05-18), paragraphs [0098]-[0108] | 1-10 |
| A | WO 2017/018099 A1 (SUMITOMO METAL MINING CO., LTD.) 02 February 2017 (2017-02-02), paragraphs [0092]-[0095] | 1-10 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 March 2021 | 30 March 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

Information on patent family members

International application No.

PCT/JP2021/007311

| | | | |
|---|---|---|---|
| WO 2002/086993 A1 | 31 October 2002 | EP 1391950 A1<br>claims, tables 1-13 | |
| JP 2017-084628 A | 18 May 2017 | US 2019/0020023 A1<br>paragraphs [0109]-[0119]<br>CN 108352527 A | |
| WO 2017/018099 A1 | 02 February 2017 | US 2018/0226646 A1<br>paragraphs [0180]-[0184]<br>EP 3331069 A1<br>CN 107851793 A<br>KR 10-2018-0023993 A | |

Form PCT/ISA/210 (patent family annex) (January 2015)

**REFERENCES CITED IN THE DESCRIPTION**

**Patent documents cited in the description**

- JP 2020030445 A
- JP 2007257985 A
- WO 2012111813 A1
- JP 2002201028 A
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1